(19) Europäisches Patentamt
European Patent Office
Office européen des brevets

(11) EP 2 045 632 A1

(12) EUROPEAN PATENT APPLICATION
published in accordance with Art. 153(4) EPC

(43) Date of publication:
**08.04.2009 Bulletin 2009/15**

(21) Application number: **07768208.6**

(22) Date of filing: **05.07.2007**

(51) Int Cl.:
***G02B 5/30*** *(2006.01)* ***C08K 5/1535*** *(2006.01)*
***C08K 5/3475*** *(2006.01)* ***C08L 1/08*** *(2006.01)*
***G02F 1/1335*** *(2006.01)*

(86) International application number:
**PCT/JP2007/063459**

(87) International publication number:
**WO 2008/010421 (24.01.2008 Gazette 2008/04)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **21.07.2006 JP 2006199200**

(71) Applicant: **Konica Minolta Opto, Inc.**
**Hachioji-shi,**
**Tokyo 192-8505 (JP)**

(72) Inventors:
- **KAWABE, Satomi**
  **Hino-shi**
  **Tokyo 191-8511 (JP)**
- **YAMADA, Rumiko**
  **Hachioji-shi**
  **Tokyo 192-8505 (JP)**
- **SAITO, Koichi**
  **Hachioji-shi**
  **Tokyo 192-8505 (JP)**

(74) Representative: **Henkel, Feiler & Hänzel**
**Patentanwälte**
**Maximiliansplatz 21**
**80333 München (DE)**

# (54) OPTICAL FILM, PROCESS FOR PRODUCING THE SAME, POLARIZING PLATE AND LIQUID CRYSTAL DISPLAY DEVICE

(57) It is intended to provide an optical film capable of reducing the occurrence of horseback (U-shaped deformation) failure, transfer of winding core and wrinkles at the start of winding, a process for producing the same, a polarizing plate with high contrast and a liquid crystal display device. The optical film of the invention is **characterized by** comprising a cellulose ester and an ultraviolet absorber represented by the following general formula (1). General formula (1). In the formula, $R_1$ represents: $R_2$ represents a methyl group, a t-butyl group, t-amyl group, or t-octyl group, $R_3$ represents a substituent, $R_4$ and $R_5$ represent a hydrogen atom or a substituent, m represents an integer of 0 to 3, and n represents an integer of 0 to 4.

[1]

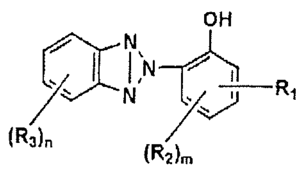

[2]

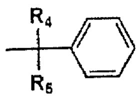

EP 2 045 632 A1

## Description

## TECHNICAL FIELD

The present invention relates to an optical film, a method of manufacturing the same, a polarizing plate, and a liquid crystal display device.

## BACKGROUND

Recently, studies and development have been made regarding decrease in product thickness and weight of a note board type personal computer, enlargement of a display and high precision of image. In parallel with this development, decrease in thickness, increase in width and improvement of quality of an optical film have also been strongly demanded. Generally, a film made of a cellulose ester is widely utilized as a polarizing plate protective film which is an optical film used for a liquid crystal display device.

Deterioration via UV radiation was inhibited by mixing a UV absorbent such as a benzotriazole based compound, benzophenone based compound or a cyanoacrylate based compound and a salicylic acid based compound. However, since these UV absorbents exhibit low solubility, they easily bleed out, are easily precipitated on a film and drop transparency because of increase of haze. Further, there appeared various problems such that an addition amount was decreased via vaporization during a heat treatment, and UV absorbing capability was lowered together with generation of contamination in the manufacturing process, and so forth.

Trials to solve those problems by introducing a polymerizable group into a UV absorbent, and conducting homopolymerization or copolymerization to produce a UV absorbing polymer are described in Patent Documents 1 - 4. An example in which a UV absorbing polymer is contained a polarizing plate protective film is described in Patent Document 5.

UV absorbing polymers described in these Patent Documents exhibit bleeding-out, prevented precipitation, and prevented vaporization in some degree, but no sufficient transparency can be obtained, or the film itself is colored yellowish, since they are insufficient in UV absorbing ability, and compatibility with a resin is insufficient when a large amount of addition amount is necessary to obtain a desired UV absorbing capability, and then, a large amount of the UV absorbing polymer is added. There was also another problem such that UV absorbing capability was lowered during storage for a long duration, whereby such the film was difficult to be utilized as a polarizing plate protective film. It is demanded for a property of the polarizing plate protective film to sufficiently cutoff UV light having a wavelength of 380 nm or less and to sufficiently transmit light having a wavelength of at least 400 nm, and various kinds of UV absorbents are proposed.

UV absorbents in which a phenyl group or an alkyl group is substituted in a 2'-hydroxyphenylbenzotriazole based UV absorbent, for example, are described in Patent Documents 6 and 7. However, there are problems such that white turbidity tends to be partially caused on a film, and its precipitation is easily produced on the film since the UV absorbents described in those Patent Documents exhibit low solubility with respect to a solvent. Thus, further improvement of those is demanded.

An optical film containing a cellulose ester (hereinafter, referred to simply as a cellulose ester film) has been produced exclusively by a solution casting method. the solution casting method is a film preparation method by which a solution obtained by dissolving a cellulose ester in a solvent is cast to get a form of a film, and the solvent is subsequently vaporized and dried to produce a film. The film produced via the solution casting method has a high degree of flatness, and can be employed to produce a liquid crystal display capable of displaying a high quality image free from unevenness.

However, the solution casting method requires a large quantity of organic solvent and involves a problem of environmental load, for its dissolution characteristics, the cellulose ester film is formed employing a halogen based solvent having a large environmental load, and reduction in the amount of solvent to be used is particularly demanded, when using this method. Thus, it has become difficult to increase the production of cellulose ester films by the solution casting method.

Further, since a solvent remaining within the film is to be removed, an enormous increase of equipment investment and production cost for, for example, a drying line, drying energy, apparatuses, and recovery regeneration of the vaporized solvent results. Therefore, it has become important to reduce those.

In recent years, there was attempted melting film formation of cellulose esters as used in silver salt photography or used as a polarizing plate protective film, but cellulose esters are polymers exhibiting a remarkably high melt-viscosity as well as a high glass transition temperature, and when a cellulose ester was melted, extruded through a die and cast onto a cooling drum or a cooling belt, it was difficult to realize sufficient leveling and solidification was completed in a short period of time after being extruded, which produced problems such that flatness of the obtained film was inferior to that of a film prepared via solution-casting (refer to Patent Documents 8 and 9).

Conventionally, the cellulose ester film is wound on a winding core, resulting in a film web, which is stored and

transported. With larger size of the screen of a liquid crystal display device, widening of the film width and lengthening of the winding length have recently been demanded. Thus, this has resulted in a wider film web and an increased load on the film web. In cases where such the film web is stored for a long period of time, a trouble called "horseback failure" or "winding core transfer" at the winding core portion of the film web occurs. It was also found out that there was a problem such that wrinkles were easily generated on the film when starting winding.

The horseback failure is a failure in which the film web is deformed in the shape of a letter U similar to the shape of a horseback, and belt-shaped projections are produced close to the center at a pitch of about 2 - 3 cm. Since deformation remains unremoved on the film, the surface appears distorted when it is processed to a polarizing plate. Further, the cellulose ester film placed on the outermost surface of the liquid crystal display is subjected to clear-hard processing, anti-glare processing or anti-reflection processing. When the surface of the cellulose ester film is deformed during such the processing, coating unevenness or evaporation unevenness is caused, and hence the product yield rate is to be substantially reduced. Generation of the horseback failure has been avoided so far by decreasing a base-to-base dynamic friction coefficient or by adjusting the height in knurling (embossing) on both sides. A proposal concerning an improving method has been made based on the finding that the horseback failure is caused by the winding core being deflected by the film load (refer to Patent Document 10, for example). In addition, the winding core transfer is a failure in which the roughened surface of the winding core or film is transferred into a film wound on the winding core, resulting in generation of deformed films.

In the case of the melting film formation, the melting film formation is tried to be conducted easily by increasing carbon atoms of ester groups to lower a melting point. Specifically utilized is a cellulose ester highly substituted with a long-chain propionate group, butyrate group or the like other than an acetate group as a cellulose ester (refer to Patent Documents 11 and 12). However, since a cellulose ester film prepared by the foregoing method is highly substituted with the long-chain propionate group, butyrate group or the like other than the acetate group, it was confirmed that there were problems such that the film width is widened because of lowering of mechanical strength of the film, and a trouble called "horseback failure" or "winding core transfer" when lengthening the core length and wrinkles on the film when starting winding tend to be generated.

Further, in the case of the melting film formation of a cellulose ester, an optical film having good flatness together with reduced white turbidity unevenness is to be obtained by containing a UV absorbent possessing at least two benzotriazole moieties (Patent Document 13). However, a cellulose ester film having wide width, which is suitable for recent liquid crystal TVs, is demanded, but only these techniques have been insufficient, and further means is still demanded.

Patent Document 1: Japanese Patent O.P.I. Publication No. 60-38411
Patent Document 2: Japanese Patent O.P.I. Publication No. 62-181360
Patent Document 3: Japanese Patent O.P.I. Publication No. 3-281685
Patent Document 4: Japanese Patent O.P.I. Publication No. 7-90184
Patent Document 5: Japanese Patent O.P.I. Publication No. 6-148430
Patent Document 6: Japanese Patent O.P.I. Publication No. 7-11056
Patent Document 7: Japanese Patent O.P.I. Publication No. 9-90101
Patent Document 8: Published Japanese Translation of PCT International Publication No. 6-501040
Patent Document 9: Japanese Patent O.P.I. Publication No. 2000-352620
Patent Document 10: Japanese Patent O.P.I. Publication No. 2002-3083
Patent Document 11: Japanese Patent O.P.I. Publication No. 2005-178194
Patent Document 12: Japanese Patent O.P.I. Publication No. 2005-301225
Patent Document 13: Japanese Patent O.P.I. Publication No. 2006-113175

## DISCLOSURE OF THE INVENTION

### PROBLEMS TO BE SOLVED BY THE INVENTION

The present invention was made on the basis of the above-described situation. It is an object of the present invention to provide an optical film exhibiting less generation of horseback failure, winding core transfer and wrinkles on a film when starting winding, and to provide a manufacturing method thereof, further together with a polarizing plate and a liquid crystal display device exhibiting high contrast.

### MEANS TO SOLVE THE PROBLEMS

The object of the present invention is accomplished by the following structures.

(Structure 1) An optical film comprising a cellulose ester and a UV absorbent represented by the following Formula (1):

Formula (1)

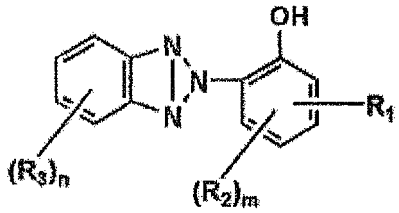

, wherein $R_1$ represents

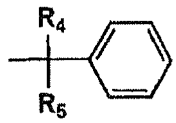

; $R_2$ represents a methyl group, a t-butyl group, a t-amyl group or a t-octyl group; $R_3$ represents a substituent; each of $R_4$ and $R_5$ represents a hydrogen atom or a substituent; m is an integer of 0 - 3; and n is an integer of 0 - 4.

(Structure 2) The optical film of Structure 1 comprising a compound represented by the following Formula (2):

Formula (2)

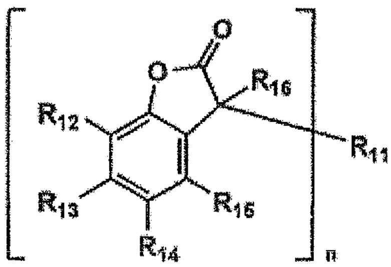

, wherein each of $R_{12}$ - $R_{15}$ independently represents a hydrogen atom or a substituent; $R_{16}$ represents a hydrogen atom or a substituent; and n is 1 or 2, provided that $R_{11}$ represents a substituent when n is 1, and $R_{11}$ represents a divalent linkage group when n is 2.

(Structure 3) The optical film of Structure 1 or 2, wherein the cellulose ester simultaneously satisfies the following Inequalities (I), (II) and (III).

Inequality (1) $2.4 \leq X + Y \leq 3.0$
Inequality (II) $0 \leq X \leq 2.4$
Inequality (III) $0.5 \leq Y \leq 2.9$

wherein X represents a substitution degree of an acetyl group, and Y represents a substitution degree of a propionyl group or a butyryl group.

(Structure 4) A method of manufacturing an optical film, comprising the step of preparing the optical film of any one of Structures 1 - 3 by a melt casting method.

(Structure 5) A polarizing plate, wherein the optical film of any one of Structures 1 - 3, or the optical film obtained via the method of Structure 4 is provided on at least one surface of a polarizer.

(Structure 6) A liquid crystal display device, wherein the polarizing plate of Structure 5 is provided on at least one surface of a liquid crystal cell.

## EFFECT OF THE INVENTION

The present invention is possible to provide an optical film exhibiting less generation of horseback failure, winding core transfer and wrinkles on a film when starting winding, and to provide a manufacturing method thereof, further together with a polarizing plate and a liquid crystal display device exhibiting high contrast.

## BRIEF DESCRIPTION OF THE DRAWINGS

Fig. 1 is a diagram showing a schematic flow of one embodiment concerning an apparatus with a method of manufacturing a cellulose ester film of the present invention.
Fig. 2 is a diagram showing an enlarged flow of a major part of the manufacturing apparatus in Fig. 1.
Fig. 3(a) is an appearance diagram showing a major part of a casting die, and Fig. 3(b) is a cross-sectional view of the major part of the casting die.
Fig. 4 is a cross-sectional view of the first embodiment of a pressing rotary member.
Fig. 5 is a cross-sectional view of a plane perpendicular to the axis of rotation in the second embodiment of a pressing rotary member.
Fig. 6 is a cross-sectional view of a plane including the axis of rotation in the second embodiment of a pressing rotary member.
Fig. 7 is a decomposed perspective view showing a schematic configuration diagram of a liquid crystal display device.
Fig. 8(a), Fig. 8(b) and Fig. 8(c) each show a storage situation of a cellulose ester film web.

## EXPLANATION OF NUMERALS

| | |
|---|---|
| 1 | Extruder |
| 2 | Filter |
| 3 | Static mixer |
| 4 | Casting die |
| 5 | Rotating support (the first cooling roll) |
| 6 | Pressing rotary member (touch roll) |
| 7 | Rotating support (the second cooling roll) |
| 8 | Rotating support (the third cooling roll) |
| 9, | 11, 13, 14, 15 Conveyance roll |
| 10 | Cellulose ester film |
| 16 | Winding apparatus |
| 21a, 21b | Protective film |
| 22a, 22b | Retardation film |
| 23a, 23b | Slow axis direction of a film |
| 24a, 24b | Transmission axis direction of a polarizer |
| 25a, 25b | Polarizer |
| 26a, 26b | Polarizing plate |
| 27 | Liquid crystal cell |
| 29 | Liquid crystal display device |
| 31 | Die as a main body |
| 32 | Slit |
| 41 | Metal sleeve |
| 42 | Elastic roller |
| 43 | Metallic inner sleeve |
| 44 | Rubber |
| 45 | Cooling water |
| 51 | Outer sleeve |
| 52 | Inner sleeve |
| 53 | space |
| 54 | Coolant |
| 55a, 55b | Rotary shaft |

56a, 56b Outer sleeve supporting flange
60 Fluid shaft sleeve
61a, 61b Inner sleeve supporting flange
62a, 62b Intermediate passage
110 Winding core as a main bidy
117 Supporting plate
118 Mount
120 Cellulose ester film web

## DESCRIPTION OF THE PREFERRED EMBODIMENTS

After considerable effort during intensive studies concerning an optical film containing a UV absorbent capable of solving the above-described problems, the inventors have found out that an optical film exhibiting less generation of horseback failure, winding core transfer, and wrinkles on a prepared film at a time when starting winding can be obtained by using a UV absorbent possessing a specific structure. Further, the inventors have also found out that a polarizing plate in which high contrast is maintained and a liquid crystal display device thereof can be obtained by using the resulting optical film.

The preferred embodiments of the present invention will be explained below, but the present invention is not limited thereto.

{UV absorbent represented by Formula (1)}

It is a feature that an optical film of the present invention contains a UV absorbent represented by Formula (1).

In Formula (1), $R_1$ represents

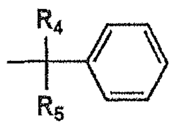

; $R_2$ represents a methyl group, a t-butyl group, a t-amyl group or a t-octyl group; $R_3$ represents a substituent; $R_4$ and $R_5$ each represent a hydrogen atom or a substituent; m is an integer of 0 - 3; and n is an integer of 0 - 4.

The substituent represented by $R_3$, $R_4$ or $R_5$ is not specifically limited, but examples of the substituent include an alkyl group (for example, a methyl group, an ethyl group, a propyl group, an isopropyl group, a t-butyl group, a pentyl group, a hexyl group, an octyl group, a dodecyl group, or a trifluoromethyl group), a cycloalkyl group (for example, a cyclopentyl group or a cyclohexyl group), an aryl group (for example, a phenyl group, or a naphthyl group), an acylamino group (for example, an acetylamino group, or a benzoylamino group), an alkylthio group (for example, a methylthio group, or an ethylthio group), an arylthio group (for example, a phenylthio group or a naphthylthio group), an alkenyl group (for example, a vinyl group, 2-propenyl group, a 3-butenyl group, a 1-methyl-3-propenyl group, a 3-pentenyl group, a 1-methyl-3-butenyl group, a hexenyl group or a cyclohexenyl group), a halogen atom (for example, fluorine, chlorine, bromine, iodine), an alkinyl group (for example, a propargyl group), a heterocyclic group (for example, pyridyl group, a thiazolyl group, an oxazolyl group or an imidazolyl group), an alkylsulfonyl group (for example, a methylsulfonyl group or an ethylsulfonyl group), an arylsulfonyl group (for example, a phenylsulfonyl group or a naphthylsulfonyl group), a sulfinyl group (for example, a methylsulfinyl group), an arylsulfonyl group (a phenylsulfinyl group), a phosphono group, an acyl group (for example, an acetyl group, a pivaloyl group or a benzoyl group), a carbamoyl group (for example, an aminocarbonyl group, a methylaminocarbonyl group, a dimethylaminocarbonyl group, a butylaminocarbonyl group, a cyclohexylaminocarbonyl group, a phenylaminocarbonyl group, or a 2-pyridylaminocarbonyl group), a sulfamoyl group (for example, an aminosulfonyl group, a methylaminosulfonyl group, a dimethylaminosulfonyl group, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group or a 2-pyridylaminosulfonyl group), a sulfonamide group (for example, a methanesulfonamide group or a benzene sulfonamide group), a cyano group, an alkoxy group (for example, a methoxy group, an ethoxy group, or a propoxy group), an aryloxy group (for example, a phenoxy group or a naphthyloxy group), a heterocyclic oxy group, a silyloxy group, an acyloxy group (for example, an acetyloxy group, or a benzoyloxy group), a sulfonic acid group, a sulfonate group, an aminocarbonyloxy group, an amino group (for example, an amino group, an ethylamino group, a dimethylamino group, a butylaminocarbonyl group, a cyclopentylamino group, a 2-ethylhexylamino group, or a dodecylamino group), an anilino group (for example, a phenylammino group, a chlorophenylammino group, a toluidino group, an anisidino group, a naphthylamino group or a 2-pyridylamino group), an imino group, a ureido group (for example, a methylureido group, an ethylureido group, a pentylureido group, a cyclohexylureido group, an octylureido group, a dodecylureido group, a phenylureido group, a naphthylureido group, or a 2-pyridylureido group), an alkoxycarbonylamino group (for example, a methoxycarbonylamino group or a phenoxycarbonylamino group), an alkoxycarbonyl group (for example, a methoxycarbonyl group or an ethoxycarbonyl group), an aryloxycarbonyl group (for example, a phenoxycarbonyl group), a heterocyclicthio group, a thioureido group, a carboxyl group, a carboxylate group, a hydroxyl group, a mercapto group, a nitro group and so forth. These substituents each may be further substituted with the similar substituent.

As $R_3$, a halogen atom is preferable.

As each of $R_4$ and $R_5$, a hydrogen atom or an alkyl group is preferable, and as the alkyl group, a methyl group or an ethyl group is specifically preferable.

Each $R_2$ may be identical or different when m is at least 2, but it is preferable that m is 1. Each $R_3$ may be identical or different when n is at least 2, but it is preferable that n is 0. It is specifically preferable that $R_2$ represents a t-octyl group.

Next, specific examples of the UV absorbent represented by foregoing Formula (1) in the present invention are shown, but the present invention is not limited by the following specific examples.

1-1

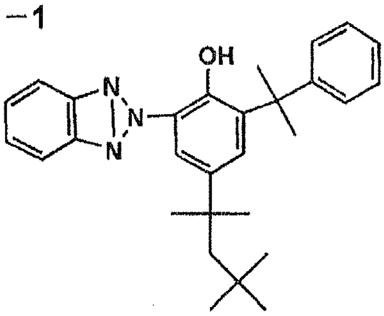

1-2

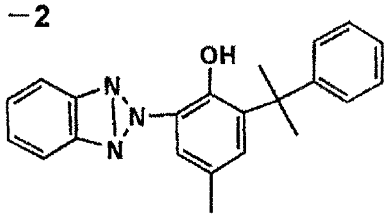

1-3

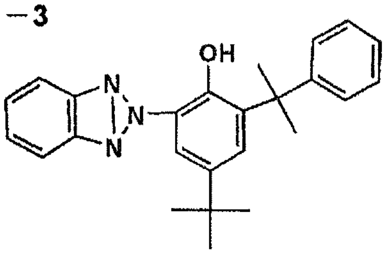

1-4

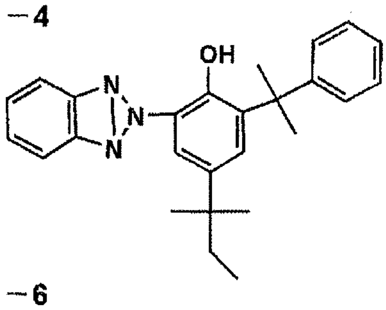

1-5

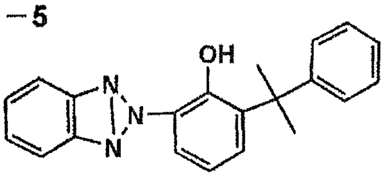

1-6

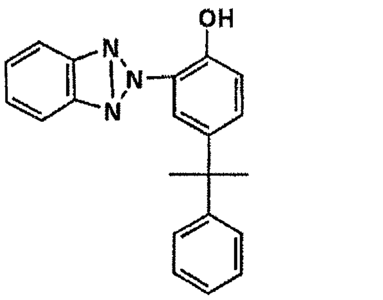

1-7

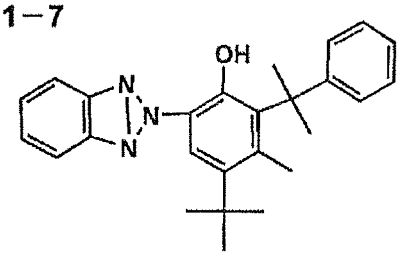

1-8

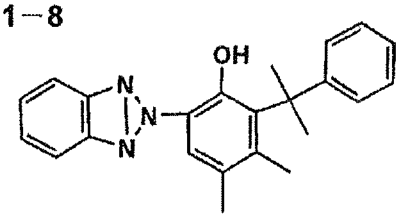

1-9

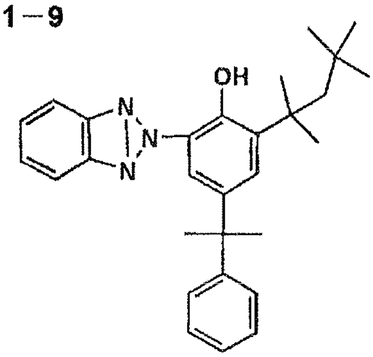

1-10

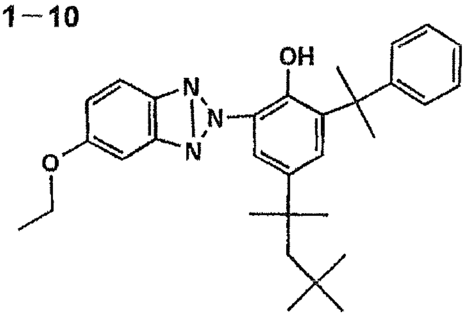

1-11

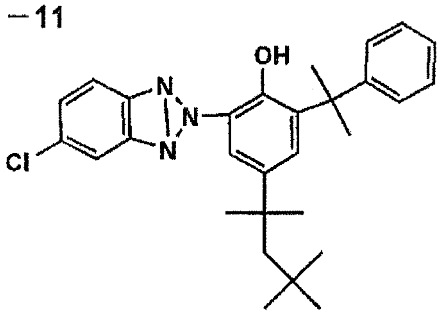

1-12

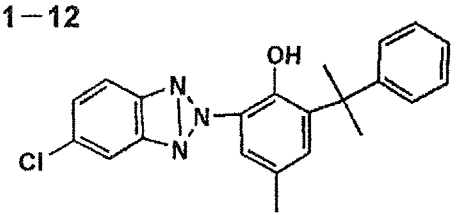

1-13

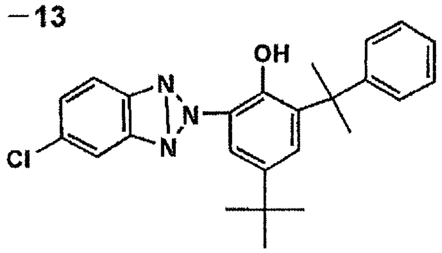

1-14

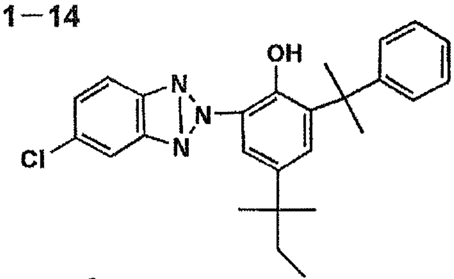

1-15

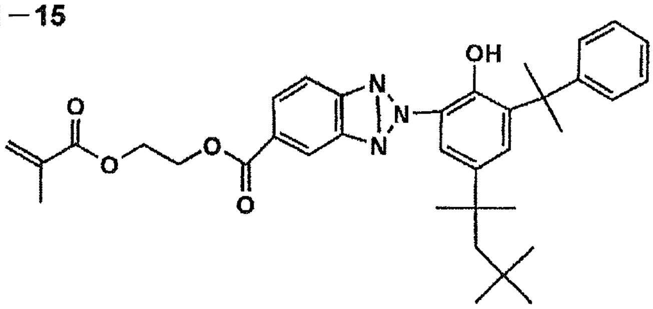

1-16

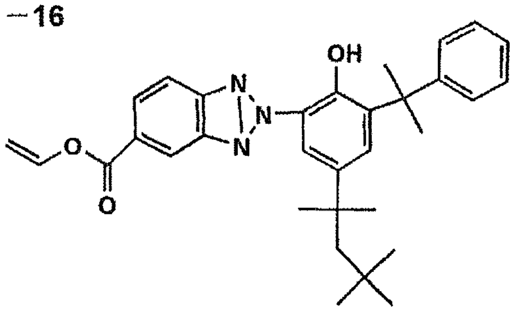

1-17

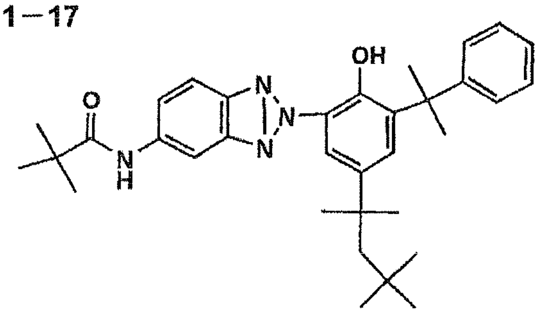

1-18

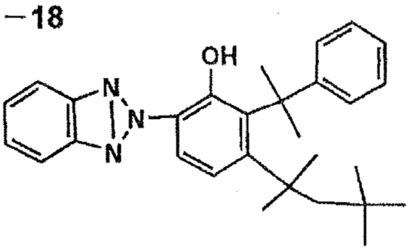

1-19

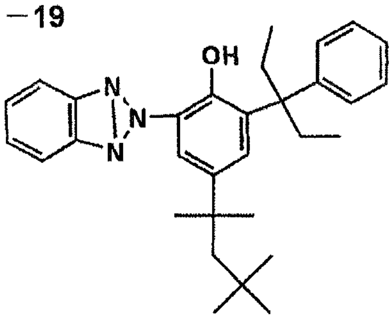

1-20

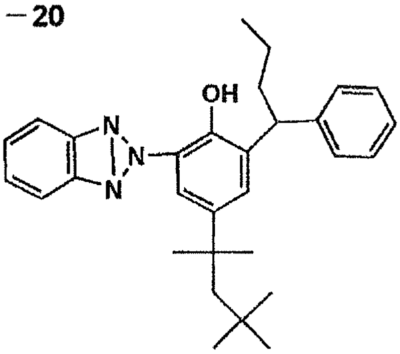

1-21

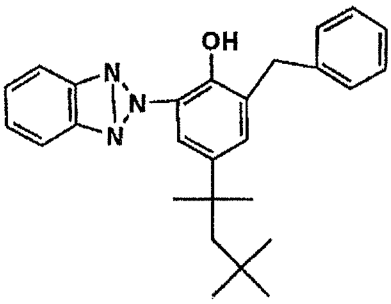

In the present invention, preferable is 2-(2H-benzotriazole-2-yl)-6-(1-methyl-1-phenylethyl)-4-(1,1,3,3-tetramethylbutyl) phenol.

In the present invention, commonly known UV absorbents can also be used as long as effects of the present invention are not deteriorated. The commonly known UV absorbents are not specifically limited, but examples thereof include a salicylic acid type UV absorbent such as phenyl salicylate, p-tert-butyl salicylate or the like; a benzophenone type UV absorbent such as 2,4-dihydroxy-benzophenone, 2,2'-dihydroxy-4,4'-dimethoxybenzophenone or the like; a benzotriazole type UV absorbent such as 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3'-dodecyl-5'-methylphenyl) benzotriazole, 2-(2'-hydroxy-3'-tert-butyl-5'-(2-octyloxycarbonylethyl)-phenyl)-5-chlorobenzotriazole, 2-(2'-hydroxy-3',5'-di-(1-methyl-1phenylethyl)-phenyl) benzotriazole), 6,6'-methylenebis(2-(2H-benzo[d][1,2,3]triazole-2-yl)-4-(2,4,4,-trimethylpentane-2-yl)phenol, 6,6'-methylenebis(2-2H-benzo[d][1,2,3]triazole-2-yl)-4-(2-hydroxyethyl)phenol) or the like; a cyanoacrylate type UV absorbent such as 2'-ethylhexyl-2-cyano-3,3-diphenylacrylate, ethyl-2-cyano-3-(3',4'-methylenedioxyphenyl)-acrylate or the like; a triazine type UV absorbent; compounds described in Japanese Patent O.P.I. Publication Nos. 58-185677 and 59-149350; a nickel complex salt based compound; inorganic powder and so forth.

As commonly known UV absorbents usable with a UV absorbent of the present invention, the benzotriazole type UV absorbents and the triazine type ultraviolet absorbents exhibiting high transparency and excellent resistance against deterioration of a polarizing plate and an a liquid crystal element are preferable, and the benzotriazole type UV absorbents having a more suitable absorption spectrum is specifically preferable.

In the present invention, a commonly known UV absorbing polymer can be used in combination. The commonly known UV absorbing polymer is not specifically limited, but provided are, for example, a polymer obtained via homopolymerization of LUVA-93 (produced by Otuka Kagaku Co., Ltd.), a copolymer obtained via copolymerization of LUVA-93 and another monomer. Specific examples thereof include PUVA-30M obtained via copolymerization of RUVA 93 and methyl methacrylate (3:7 by weight ratio), PUVA-50M obtained via copolymerization RUVA 93 and methyl methacrylate (5:5 by weight ratio), and so forth. Further provided are polymers disclosed in Japanese Patent O.P.I. Publication No. 2003-113317.

As described above, the commonly known UV absorbents usable with a UV absorbent of the present invention were explained, but it is difficult to solve the problem to be solved by the present invention, in cases where only the commonly known UV absorbent is utilized without using a UV absorbent of the present invention.

In the present invention, UV absorbents represented by Formula (1) may be preferably added in an amount of 0.1 - 20% by weight with respect to the weight of cellulose ester, more preferably added in an amount of 0.5 - 10% by weight, and still more preferably added in an amount of 1 - 5% by weight. Further, these may be used in combination with at least two kinds. In addition, commonly known UV absorbents may be added as long as effects of the present invention are not deteriorated.

(Cellulose ester)

Next, a cellulose ester usable in the present invention will be described indetail.

An optical film containing cellulose ester usable in the present invention (hereinafter, referred to simply as a cellulose ester film) is prepared by a solution casting method or a melt casting method. In the case of a solution casting method, a solution (dope) in which a cellulose ester is dissolved in a solvent is cast on a support, and the solvent is vaporized to form a film. In the case of a melt casting method, a melt in which a cellulose ester is melted by heat is cast on a support to form a film. The melt casting method permits a substantial reduction in the amount of the organic solvent during preparation of the film. In comparison to the solution casting method consuming a large amount of conventional organic solvents, the melt casting method provides a film exhibiting substantial improvement in environmental suitability. Thus, the cellulose ester film is preferably manufactured by the melt casting method.

The melt casting method of the present invention is a method of forming a film by heating and melting a cellulose ester up to the temperature where it becomes a fluid, without employing a solvent, and for example, is the method of forming a film by pushing the fluid cellulose ester through a die. In addition, a solvent may be used in some parts of the process to prepare the molten cellulose ester, but in the melt film formation process by which it is molded in the form of a film, a molding operation is conducted without employing a solvent.

The cellulose ester constituting an optical film is not specifically limited as long as it is a cellulose ester capable of melt film formation. For example, an aromatic carboxylic acid and so forth are also utilized, but a lower fatty acid ester of cellulose is preferably used in view of properties of the resulting film such as optical properties.

In the present invention, a lower fatty acid in the lower fatty acid ester of cellulose means a fatty acid containing 5 carbon atoms or less. Cellulose acetate, cellulose propionate, cellulose butylate, cellulose pivalate and so forth are preferable as the lower fatty acid ester of cellulose. Though the cellulose ester substituted by a fatty acid containing at least 6 carbon atoms exhibits excellent melt film formation, the resulting cellulose ester film exhibits low dynamic property, whereby it is difficult to be used as an optical film.

To ensure compatibility between the dynamic property and melt film formation, it is preferred to use a mixed fatty acid ester such as cellulose acetate propionate, cellulose acetate butylate and so forth. In addition, triacetyl cellulose as a cellulose ester commonly utilized for the solution casting film formation is not usable for melt casting because of a cellulose ester having a melting temperature higher than a decomposition temperature.

Next, a substitution degree of an acyl group in a cellulose ester of the present invention will be described.

Cellulose has three hydroxyl groups like one hydroxyl group at each of 2-, 3- and 6-positions of a glucose unit, and the total substitution degree means a value indicating how many acyl groups are bonded to one glucose unit on

average. Accordingly, the maximum substitution degree is 3.0. These acyl groups may be averagely substituted at 2-, 3- and 6-positions of the glucose unit, or may be substituted in distribution.

With respect to a substitution degree of a mixed fatty acid ester, as to a lower fatty acid ester such as cellulose acetate propionate, cellulose acetate butyrate or the like containing an acyl group having 2 - 4 carbon atoms as a substituent, when X represents a substitution degree of an acetyl group and Y represents a substitution degree of a propionyl group or a butyryl group, a cellulose resin containing a cellulose ester simultaneously satisfying the following inequalities (I), (II) and (III) is preferable. In addition, each of a substitution degree of the acetyl group and that of another acyl group is determined in accordance with ASTM-D817-96.

$$\text{Inequality (I)} \quad 2.4 \leq X + Y \leq 3.0$$

$$\text{Inequality (II)} \quad 0 \leq X \leq 2.4$$

$$\text{Inequality (III)} \quad 0.5 \leq Y \leq 2.9$$

Of these, cellulose acetate propionate is preferably employed, and it is preferable that $1.2 \leq X \leq 2.1$ and $0.6 \leq Y \leq 1.4$. Further, it is more preferable that $1.3 \leq X \leq 1.7$ and $0.9 \leq Y \leq 1.4$. There may be blended cellulose esters differing in their substitution degrees so that the overall cellulose ester film may fall within the above-described range. The portion which is not substituted by the acyl group usually exists as a hydroxyl group. These can be synthesized by commonly known methods.

The cellulose ester of the present invention preferably has a number average molecular weight (Mn) of 50,000 - 150,000, more preferably has a number average molecular weight of 55,000 - 120,000, and most preferably has a number average molecular weight of 60,000 to 100,000.

Further, a cellulose ester used in the present invention preferably has a ratio of weight average molecular weight (Mw) / number average molecular weight (Mn) of 1.3 - 5.5, more preferably has a ratio of weight average molecular weight (Mw) / number average molecular weight (Mn) of 1.5 - 5.0, still more preferably has a ratio of weight average molecular weight (Mw) / number average molecular weight (Mn) of 1.7 - 3.5, and most preferably has a ratio of weight average molecular weight (Mw) / number average molecular weight (Mn) of 2.0 - 3.0.

Here, the Mn and the ratio of Mw/Mn were calculated via gel permeation chromatography with the following procedures.

The measuring conditions are as follows:

Solvent: tetrahydrofuran
Device: HLC-8220 (manufactured by Toso KK)
Column: TSKgel SuperHM-M (manufactured by Toso KK)
Column temperature: 40 °C
Sample concentration: 0.1% by weight
Feed amount : 10 μl
Flow: 0.6 ml/min
Calibration curve: obtained from 9 samples (Mw = 580 - 2,560,000) of standard polystyrene: PS-1 (manufactured by Polymer Laboratories KK)

Though a wood pulp or a cotton linter is suitable as a raw material of a cellulose ester used in the present invention, and the wood pulp may be a needle-leaf tree or a broadleaf tree, the needle-leaf tree is more desirable. In view of a peeling property during film formation, the cotton linter is preferably usable. The cellulose ester made from these may be appropriately mixed or may be used singly.

For example, a cotton linter-originated cellulose ester : a wood-pulp (needle-leaf tree)-originated cellulose ester : a wood pulp (broadleaf tree)-originated cellulose ester may be used with a ratio of 100:0:0, 90:10:0, 85:15:0, 50:50:0, 20:80:0, 10:90:0, 0:100:0, 0:0:100, 80:10:10, 85:0:15 and 40:30:30.

The cellulose ester can be obtained by substituting hydroxyl groups in a raw material of cellulose with an acetyl group, a propionyl group and/or a butyryl group within the above range with a conventional method by employing acetic anhydride, propionic anhydride, and/or butyric anhydride, for example. A synthetic method of these cellulose esters is not specifically limited, but for example, these cellulose esters may be synthesized by referring a method disclosed in Japanese Patent O.P.I. Publication No. 10-45804 or Japanese Patent O.P.I. Publication No. 6-501040.

The cellulose ester used in the present invention preferably has an alkaline earth metal content of 1 - 50 ppm. In the case of a content exceeding 50 ppm, a lip adhesion soil increases or a slitting part tends to fracture during hot stretching or after hot stretching. In the case of a content of less than 1 ppm, a breakage trouble may take place easily, but the reasons for it is not known well. Further, in order to make it less than 1 ppm, since the burden of a washing process becomes too large, it is not desirable at this point. More preferably, the content is in a range between 1 and 30 ppm. Herein, the alkaline earth metals are of the total content of Ca and Mg, and it can be measured by using an X ray photoelectron spectral-analysis equipment (XPS).

A residual sulfuric acid content in the cellulose ester used in the present invention is 0.1 - 45 ppm in terms of a sulfur element conversion. They are considered to be included as salts. In the case of a residual sulfuric acid content exceeding 45 ppm, an increase of adhesion matters on the die lip during heat-melting is not preferred, and fracture is not preferred at a time of slitting during or after thermal stretching. The amount of the residual sulfuric acid contained therein should be reduced as much as possible, but when it is to be reduced below 0.1 ppm, the load on the cellulose ester washing process will be excessive and the material tends to be damaged easily. This should be avoided. This may be because an increase in the frequency of washing influences the resin, but the details have not yet been clarified. Further, the preferred content is 1 - 30 ppm. The content of the residual sulfuric acid can be measured in accordance with ASTM-D817-96.The free acid content in the cellulose ester used in the present invention is desirably 1 - 500 ppm. In the case of a content exceeding 500 ppm, adhesion matters around a die-lip portion increase, and fracture is easily caused. It is difficult to make it less than 1 ppm by washing. The content is preferably 1 - 100 ppm, because it becomes difficult to fracture. Specifically, the content is more preferably 1 - 70 ppm. The free acid content can be measured by a method specified by ASTM-D817-96.

The residual acid content can be kept within the above-described range when the synthesized cellulose ester is washed more sufficiently than in the case of the solution casting method. Then, when a film is manufactured by the melt casting, the amount of adhesion matters in the lip portion is reduced so that a film having a high degree of flatness is produced, whereby the film exhibiting excellent resistance to dimensional changes, mechanical strength, transparency, resistance to moisture permeation, Rt value and Ro value can be obtained. Ro denotes an in-plane retardation. It is obtained by multiplying the thickness by the difference between the refractive index in the longitudinal direction MD in the plane and that across the width TD. Rt denotes the retardation along the thickness, and is obtained by multiplying the thickness by the difference between the refractive index (an average of the values in the longitudinal direction MD and across the width TD) in the plane and that along the thickness.

Further, the cellulose ester can be washed employing water as well as a poor solvent such as methanol or ethanol. It is also possible to use a mixture of a poor solvent with a good solvent when as a result, it is a poor solvent. This will remove the inorganic material other than the residual acid, and low-molecular organic impurities. The cellulose ester is washed preferably in the presence of an antioxidant such as a hindered amine or phosphorous acid ester. This will improve heat resistance and film formation stability of the cellulose ester.

In order to improve heat resistance, a mechanical property and optical properties of the cellulose ester, the cellulose ester is precipitated again in the poor solvent, after dissolution of the good solvent of the cellulose ester. This will remove the low molecular weight component and other impurities of the cellulose ester. In this case, similarly to the foregoing case of washing the cellulose ester, washing is preferably carried out in the presence of an antioxidant.

Further, another polymer or a low molecular compound may be added after conducting a reprecipitation treatment of the cellulose ester.

In the present invention, in addition to the cellulose ester resin, a cellulose ether based resin, a vinyl based resin (including a polyvinyl acetate based resin and a polyvinyl alcohol based resin), a cyclic olefine resin, a polyester based resin (an aromatic polyester, an aliphatic polyester, or a copolymer possessing them), and an acrylic resin (including a copolymer), may be contained. The content of a resin other than a cellulose ester is preferably 0.1 - 30% by weight.

(Plasticizer)

In the optical film of the present invention, a plasticizer may be added. In general, addition of a compound known as a plasticizer is preferable in view of improved properties of a film such as an improved mechanical property, flexibility to be provided, resistance to water-absorbability to be provided, and reduced moisture permeance. In the melt casting method, included are a purpose of having the melting temperature of the film constituting material lower than the glass transition temperature of a cellulose ester used singly; and a purpose of having viscosity of the film constituting material containing a plasticizer lower than that of a cellulose ester at the same temperature. Herein, in the present invention, the melting temperature of the film constituting material means a temperature at which the film constituting material is heated, and fluidity is generated via heating.

In the case of cellulose ester used singly, having the melting temperature lower than the glass transition temperature, no fluidity to form a film is generated. However, when heated at a temperature higher than the glass transition temperature, elasticity or viscosity of the cellulose ester is reduced by absorbing heat, and fluidity is produced.

In order to satisfy the above-described purposes, the added plasticizer preferably has a melting point or a glass transition temperature lower than the glass transition temperature of the cellulose ester. An ester based plasticizer prepared from polyhydric alcohol and a monocarboxylic acid or from a polycarboxylic acid and monoalcohol is preferable in view of high compatibility with a cellulose ester.

Examples of polyhydric alcohol as raw material of an ester based plasticizer preferably utilized in the present invention can be provided as exemplified below, but the present invention is not limited thereto. Examples thereof include adonitol, arabitol, ethylene glycol, glycerin, diglycerin, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, dibutylene glycol, 1,2,4-butanetriol, 1,5-pentanediol, 1,6-hexanediol, hexanetriol, galactitol, mannitol, 3-methylpentane-1,3,5-triol, pinacol, sorbitol, trimethylol propane, ditrimethylol propane, trimethylol ethane, pentaethythritol, dipentaethythritol, xylitol and so forth. Ethylene glycol, glycerin and trimethylol propane are specifically preferable.

Specific examples of the ethylene glycol ester based plasticizer as one of polyhydric alcohol esters include an ethylene glycol alkyl ester based plasticizer such as ethylene glycol diacetate, ethylene glycol dibutyrate or the like; an ethylene glycol cycloalkyl ester based plasticizer such as ethylene glycol dicyclopropylcarboxylate, ethylene glycol dicyclohexylcarboxylate or the like; an ethylene glycol aryl ester based plasticizer such as ethylene glycol dibenzoate, ethylene glycol di-4-methylbenzoate or the like. These alkylate group, cycloalkylate group and arylate group each may be identical or different, and may be substituted. Further, the alkylate group, cycloalkylate group and arylate group may be mixed or substituents may be bonded via covalent bonding. Further, the ethylene glycol portion may be substituted and the partial structure of ethylene glycol may be a part of a polymer or may be regularly pendent thereto, or may be introduced into a part of the molecular structure of an additive such as an antioxidant, an acid scavenger or an ultraviolet absorbent.

Specific examples of the glycerin ester based plasticizer as one of polyhydric alcohol esters include glycerin alkyl ester such as triacetin, tributyrin, glycerin diacetate caprylate, glycerin oleate propionate or the like; glycerin cycloalkyl ester such as glycerin tricyclopropylcarboxylate, glycerin tricyclohexylcarboxylate or the like; diglycerin aryl ester such as glycerin tribenzoate, glycerin 4-methylbenzoate or the like; diglycerin alkyl ester such as diglycerin tetraacetylate, diglycerin tetrapropionate, diglycerin acetate tricaprylate, diglycerin tetralaurate or the like; diglycerin cycloalkyl ester such as diglycerin tetracyclobutylcarboxylate, diglycerin tetracyclopentylcarboxylate or the like; and diglycerin aryl ester such as diglycerin tetrabenzoate, diglycerin 3-methylbenzoate or the like. These alkylate group, cycloalkylcarboxylate group and arylate group each may be identical or different, and may further be substituted. The alkylate group, cycloalkylcarboxylate group and arylate group may also be mixed or these substituents may be bonded via covalent bonding. Further, the glycerin or diglycerin portion may be substituted and the partial structure of a glycerin ester or diglycerin ester may be a part of a polymer or may be regularly pendent thereto, or may be introduced into a part of the molecular structure of an additive such as an antioxidant, an acid scavenger or an ultraviolet absorbent.

Further, as the other polyhydric alcohol ester based plasticizer, cited are those described in paragraphs 30 - 33 of Japanese Patent O.P.I. Publication No. 2003-12823.

These alkylate group, cycloalkylcarboxylate group and arylate group each may be identical or different, and may further be substituted. The alkylate group, cycloalkylcarboxylate group and arylate group may be mixed or these substituents may be bonded via covalent bonding. Further, the polyhydric alcohol portion may be substituted and the partial structure of the polyhydric alcohol may be a part of a polymer or may be regularly pendent thereto, or may be introduced into a part of the molecular structure of an additive such as an antioxidant, an acid scavenger or an ultraviolet absorbent.

Of ester based plasticizers formed from the above-described polyhydric alcohol and monovalent carboxylic acid, an alkyl polyhydric alcohol aryl ester is preferred and specific examples thereof include the foregoing ethylene glycol dibenzoate, glycerin tribenzoate, diglycerin tetrabenzoate, and exemplified compound 16 described in paragraph 31 of Japanese Patent O.P.I. Publication No. 2003-12823.

Specific examples of the dicarboxylic acid ester based plasticizer as one of polycarboxylic acid esters include an alkyldicarboxylic acid alkyl ester based plasticizer such as didodecyl malonate, dioctyl adipate, dibutyl sebacate or the like; an alkyldicarboxylic acid cycloalkyl ester based plasticizer such as dicylopentyl succinate, dicyclohexyl adipate or the like; an alkyldicarboxylic acid aryl ester based plasticizer such as diphenyl succinate, di(4-methylphenyl) glutarate or the like; a cycloalkyldicarboxylic acid alkyl ester based plasticizer such as dihexyl-1,4-cyclohexane dicarboxylate, didecylbicyclo[2.2.1]heptane-2,3-dicarboxylate or the like; a cycloalkyldicarboxylic acid cycloalkyl ester based plasticizer such as dicyclohexyl-1,2-cyclobutane dicarboxylate, dicyclopropyl-1,2-cyclohexyl dicarboxylate or the like; a cycloalkyldicarboxylic acid aryl ester based plasticizer such as diphenyl-1,1-cyclopropyl dicarboxylate, di-2-naphthyl-1,4-cyclohexane dicarboxylate or the like; an arylcarboxylic acid alkyl ester based plasticizer such as diethyl phthalate, dimethyl phthalate, dioctyl phthalate, dibutyl phthalate, di-2-ethylhexyl phthalate or the like; an aryldicarboxylic acid cycloalkyl ester based plasticizer such as cyclopropyl phthalate, dicyclohexyl phthalate or the like; and an aryldicarboxylic acid aryl ester based plasticizer such as diphenyl phthalate, di-4-methylphenyl phthalate or the like. These alkoxy group and cycloalkoxy group may each be identical or different, or may be mono-substituted, and these substituents may further

be substituted. The alkyl group or cycloalkyl group may be mixed or these substituents may be bonded via covalent bonding. Further, the aromatic ring of a phthalic acid may be substituted, and may be a polymer such as dimer, trimer, tetramer or the like. Further, the partial structure of a phthalic acid ester may be a part of a polymer or may be regularly pendent thereto, or may be introduced into a part of the molecular structure of an additive such as an antioxidant, an acid scavenger or an ultraviolet absorbent.

An addition amount of an ester based plasticizer prepared from polyhydric alcohol and a monovalent carboxylic acid, or from a polycarboxylic acid and monohydric alcohol is conventionally 0.1 - 50 parts by weight with respect to 100 parts by weight of cellulose ester, preferably 1 - 30 parts by weight, and more preferably 3 - 15 parts by weight.

Specific examples of the other polycarboxylic acid ester based plasticizer include an alkylpolycarboxylic acid alkyl ester based plasticizer such as tridodecyl tricarbarate, tributyl-meso-butane-1,2,3,4-tetracarboxylate or the like; an alkylpolycarboxylic acid cycloalkyl ester based plasticizer such as tricyclohexyl tricarbarate, tricyclopropyl-2-hydroxy-1,2,3-propanetricarboxylate or the like; an alkylpolycarboxylic acid aryl ester based plasticizer such as triphenyl-2-hydroxy-1,2,3-propanetricarboxylate, tetra-3-methylphenyltetrahydrofuran-2,3,4,5-tetracarboxylate or the like; a cycloalkylpolycarboxylic acid alkyl ester based plasticizer such as tetrahexyl-1,2,3,4-cyclobutanetetracarboxylate, tetrabutyl-1,2,3,4-cyclopentanetetracarboxylate or the like; a cycloalkylpolycarboxylic acid cycloalkyl ester based plasticizer such as tetracyclopropyl-1,2,3,4-cyclobutanetetracarboxylate, tricyclohexyl-1,3,5-cyclohexyltricarboxylate or the like; a cycloalkylpolycarboxylic acid aryl ester based plasticizer such as triphenyl-1,3,5-cyclohexyltricarboxylate, hexa-4-methylphenyl-1,2,3,4,5,6-cyclohexylhexacarboxylate or the like; an arylpolycarboxylic acid alkyl ester based plasticizer such as tridecylbenzene-1,2,4-tricarboxylate, tetraoctylbenzebe-1,2,4,5-tetracarboxylate or the like; an arylpolycarboxylic acid cycloalkyl ester based plasticizer such as tricyclopentylbenzene-1,3,5-tricarboxylate, tetracyclohexylbenzene-1,2,3,5-tetracarboxylate or the like; and an arylpolycarboxylic acid aryl ester based plasticizer such as triphenylbenzene-1,3,5-tetracarboxylate, hexa-4-methylphenylbenzene-1,2,3,4,5,6-hexacarboxylate or the like. These alkoxy group and cycloalkoxy group each may identical or different, or may be mono-substituted, and these substituents may further be substituted. The alkyl group or cycloalkyl group may be mixed or these substituents may be bonded via covalent bonding. Further, the aromatic ring of a phthalic acid may be substituted, and may be a polymer such as dimer, trimer, tetramer or the like. Further, the partial structure of a phthalic acid ester may be a part of a polymer or may be regularly pendent thereto, or may be introduced into a part of the molecular structure of an additive such as an antioxidant, an acid scavenger or an ultraviolet absorbent.

Of the foregoing ester based plasticizers prepared from a polycarboxylic acid and monohydric alcohol, alkyldicarboxylic acid alkyl ester is preferable, and the above-described dioctyl adipate is specifically provided.

Examples of other plasticizers usable in the present invention include a phosphoric acid ester based plasticizer, a carbohydrate ester based plasticizer and a polymer plasticizer.

Specific examples of the phosphoric acid ester based plasticizer include a phosphoric acid alkyl ester such as triacetyl phosphate, tributyl phosphate or the like; a phosphoric acid cycloalkyl ester such as tricylopentyl phosphate, cyclohexyl phosphate or the like; and a phosphoric acid aryl ester such as triphenyl phosphate, tricresyl phosphate, crezylphenyl phosphate, octyldiphenyl phosphate, diphenylbiphenyl phosphate, trioctyl phosphate, tributyl phosphate, trinaphthyl phosphate, trixylyl phosphate, tris-ortho-biphenyl phosphate or the like. These substituents may be identical or different, and may be substituted. The alkyl group, cycloalkyl group and aryl group may also be mixed and substituents may be bonded via covalent bonding.

Further, examples of the phosphoric acid ester include alkylenebis(dialkylphosphate) such as ethylenebis (dimethylphosphate), butylenebis(diethylphosphate) or the like; alkylenebis(diarylphosphate) such as ethylenbis(diphenylphosphate), propylenebis(dinaphthylphosphate) or the like; and arylenebis(dialkylphosphate) such as phenylenebis (dibutylphosphate), biphenylenebis(dioctylphosphate) or the like, and arylenebis(diarylphosphate) such as phenylenebis (diphenylphosphate), naphthylenebis-(ditoluylphosphate) or the like. These substituents may be identical or different, and may further be substituted. The alkyl group, cycloalkyl group and aryl group may also be mixed and substituents may be bonded via covalent bonding.

Further, the partial structure of phosphoric acid ester may be a part of a polymer or may be regularly pendent thereto, or may be introduced into a part of the molecular structure of an additive such as an antioxidant, an acid scavenger or an ultraviolet absorbent. Of the above-described compounds, phosphoric acid aryl ester and arylenebis(diarylphosphate) are preferable, and triphenyl phosphate and phenylenebis(diphenylphosphate) are specifically preferable.

Next, the carbohydrate ester based plasticizer will be described. The carbohydrate means monosaccharide, disaccharide or trisaccharide in where saccharide is present in the form of pyranose or furanose (6- or 5-member ring). Examples of the carbohydrate exemplified in an unrestricted sense include glucose, saccharose, lactose, cellobiose, mannose, xylose, ribose, galactose, arabinose, fructose, sorbose, cellotriose and raffinose. The carbohydrate ester refers to an ester compound formed by a hydroxyl group of carbohydrate and a carboxylic acid via dehydration and condensation. It refers specifically to aliphatic carboxylic acid ester of the carbohydrate or aromatic carboxylic acid ester. The aliphatic carboxylic acid can be exemplified by acetic acid and propionic acid. The aromatic carboxylic acid is exemplified by a benzoic acid, a toluic acid and an anisic acid. The carbohydrate has the number of hydroxyl groups in

conformity to the kinds. The ester compound can be formed via reaction between part of the hydroxyl group and carboxylic acid, or via reaction between the entire hydroxyl group and carboxylic acid. In the present invention, the ester compound is preferably formed via reaction between the entire hydroxyl group and carboxylic acid.

Examples of the carbohydrate ester plasticizer include glucose pentaacetate, glucose pentapropionate, glucose pentabutylate, saccharose octaacetate, asaccharose octabenzoate and so forth. Of these, saccharose octaacetate is preferable.

Examples of the polymer plasticizer include an aliphatic hydrocarbon based polymer; an alicyclic hydrocarbon based polymer; an acryl based polymer such as a copolymer prepared from methacrylic acid-2-hydroxyethyl and polyacrylic acid ethyl, polymethacrylic acid methyl or methacrylic acid methyl, a copolymer prepared from methacrylic acid methyl, acrylic acid ethyl; a vinyl based polymer such as polyvinyl isobutylether, poly-N-vinyl pyrrolidone or the like; a styrene based polymer such as polystyrene, poly-4-hydroxystyrene or the like; polyester such as polybutylene succisinate, polyethylene terephthalate, polyethylene naphthalate or the like; polyether such as polyethylene oxide, polypropylene oxide or the like; polyamide; polyurethane; polyurea and so forth. The number average molecular weight is preferably about 1,000 - 500,000, and more preferably 5,000 - 200,000. In the case of the number average molecular weight of 1000 or less, a volatilization problem will occur. In the case of the number average molecular weight exceeding 500,000, plasticization performance is degraded, resulting in adverse influence to the mechanical properties of the cellulose ester film. The polymer plasticizer may be a homopolymer composed of one repeating unit or a copolymer possessing a plurality of repeating structures. Further, the above-described polymers may be used in combination with at least 2 kinds.

An addition amount of the other plasticizer is conventionally 0.1 - 50 parts by weight with respect to 100 parts by weight of a cellulose ester, preferably 1 - 30 parts by weight, and more preferably 3 - 15 parts by weight.

(Additives)

In an optical film of the present invention, additives having the same action as that of a plasticizer other than the above-described plasticizers are possible to be contained. The same effect as that of a plasticizer can be produced, provided that these additives are made from a low molecular weight organic compound capable of plasticizing a cellulose ester film, for example. These components are not added for the purpose of directly plasticizing a film in comparison to a plasticizer, but they exhibit the same action as a plasticizer depending on the added amount.

In order to adjust color hue of the film, for example, a blue dye may also be used as additives. As a preferable dye, an anthraquinone based dye may be provided. The anthraquinone dye may arbitrarily possess substituents at positions of 1 - 8 in anthraquinone. Preferable examples of substituents include an anilino group, a hydroxyl group, an amino group, a nitro group and a hydrogen atom which may be substituted. The amount of such the dye added into the film is preferably 0.1 - 1000 $\mu g/m^2$ and more preferably 10 - 100 $\mu g/m^2$ in order to maintain transparency of the film.

Further, since a cellulose ester is decomposed not only by heat at such a high temperature where melting film formation is carried out, but also by oxygen, the optical film of the present invention preferably contains an antioxidant as a stabilizer.

A useful antioxidant in the present invention can be employed with no limitation as long as it is a compound with which deterioration of the melt molding material is inhibited, but in the case of the optical film of the present invention, one kind selected from a phenol based compound agent, a hindered amine based compound agent, a phosphor based compound agent and a sulfur based compound agent, a heat resistant processing stabilizer and so forth may be used or at least two kinds selected from the foregoing may also be used in combination.

As the preferable phenol based compound, commonly known stabilizers are usable. Examples thereof include acrylate based compounds disclosed in Japanese Patent O.P.I. Publication Nos. 63-179953 and 1-168643 such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl) ethyl) phenyl acrylate and so forth; alkyl substituted phenol based compounds such as octadecyl-3-(3,5-di-t-butyl-4-hydroxyphenyl) propionate, 2,2'-methylene-bis(4-methyl-6-t-butylphenol), 1,1,3-tris(2-methyl-4-hydroxy-5-t-butylphenyl) butane, 1,3,5-trimethyl-2,4,6-tris(3,5-di-t-butyl-4-hydroxybenzyl) benzene, tetrakis(methylene-3-3-(3',5'-di-t-butyl-4'-hydroxyphenylpropionate) methane) namely pentaerythrimethyl-tetrakis(3-(3,5-di-t-butyl-4-hydroxyphenylpropionate)), triethyleneglycol-bis(3-(3-t-butyl-4-hydroxy-5-methylphenyl) propionate) and so forth; and triazine group-containing phenol based compounds such as 6-(4-hydroxy-3,5-di-t-butylanilino)-2,4-bisoctylthio-1,3,5-triazine, 4-bisoctylthio-1,3,5-triazine, 2-octylthio-4,6-bis-(3,5-di-t-butyl-4-oxyanilino)-1,3,5-triazine and so forth.

Examples of the preferable hindered amine based compound include bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl)2-(3,5-di-t-butyl-4-hydroxybenzyl)-2-butylmalonate, bis(1-acroyl-2,2,6,6-tetramethyl-4- piperidyl)2,2-bis(3,5-di-t-butyl-4-hydroxybenzyl)-2-butylmalonate, bis(1,2,2,6,6-pentamethyl-4-piperidyl) decanedioate, 2,2,6,6-tetramethyl-4-piperidyl methacrylate, 4-[3-(3,5-di-t-butyl-4-hydroxyphenyl) propionyloxy]-1-[2-(3-(3,5-di-t-butyl-4-hydroxyphenyl) propionyloxy) ethyl]-2,2,6,6-tetramethylpiperidine, 2-methyl-2-(2,2,6,6-tetramethyl-4-piperidyl) amino-N-(2,2,6,6-tetramethyl-4-piperidyl) propione amide, tetrakis (2,2,6,6-tetramethyl-4-piperidyl)1,2,3,4-butanetetracarboxylate, tetrakis(1,2,2,6,6-pentamethyl-4-piperidyl)1,2,3,4-butanetetracarboxylate and so forth.

Phosphor based compounds are not specifically limited as long as they are those conventionally used in general resin industries. Examples thereof include phosphite based compounds such as triphenyl phosphite, diphenyl isodecyl phosphite, phenyl diisodecyl phosphite, tris(nonylphenyl) phosphite, tris(dinonylphenyl) phosphite, tris(2,4-di-t-butylphenyl) phosphite, 10-(3,5-di-t-butyl-4-hydroxybenzyl)-9,10-dihydro-9-oxa-10-phosphaphenanthrene-10-oxide; 4,4'-butylidene-bis(3-methyl-6-t-butylphenyl-di-tridecyl phosphite), 4,4'-isopropylidene-bis(phenyl-di-alkyl (C12-C15) phosphite) and so forth, and phosphonite based compounds such as tetrakis(2,4-di-t-butylphenyl9-4,4'-biphenylenediphosphonite, tetrakis(2,4-di-t-butyl-5-methylphenyl)-4,4'-biphenylenediphosphonite and so forth.

Further, examples of the preferable sulfur based compound agent include dilauryl-3,3-thiodipropionate, dimylistyl 3,3'-thiodipropionate, distearyl 3,3-thiodipropionate, laurylstearyl 3,3-thiodipropionate, pentaerythritol-tetrakis(β-lauryl-thio-propionate), 3,9-bis(2-dodecylthioethyl)-2,4,8,10-tetraoxaspiro[5, 5] undecane and so forth.

Examples of the heat resistant processing stabilizer include 2-t-butyl-6-(3-t-butyl-2-hydroxy-5-methylbenzil)-4-methylphenyl acrylate, 2-[1-(2-hydroxy-3,5-di-t-pentylphenyl) ethyl]-4,6-di-t-pentylphenyl acrylate, and so forth.

An example of these compounds will be given below, but the present invention is not limited thereto.

IRGANOX 1010, produced by Ciba Specialty Chemicals Inc.
IRGAFOS P-EPQ, produced by Ciba Specialty Chemicals Inc.
TINUVIN 770: produced by Ciba Specialty Chemicals Inc.
TINUVIN 144: produced by Ciba Specialty Chemicals Inc.
ADK STABLA LA-52, produced by ADEKA Corp.
Sumilizer GP, produced by Sumitomo Chemical Co., Ltd.
PEP-24G, produced by ADEKA Corp.
Sumilizer TP-D, produced by Sumitomo Chemical Co., Ltd.
GSY-P101, produced by Sakai Chemical Industry Co., Ltd.
Sumilizer GM, produced by Sumitomo Chemical Co., Ltd.
Sumilizer GS, produced by Sumitomo Chemical Co., Ltd.

The antioxidant is preferably added in an amount of 0.1 - 10 parts by weight with respect to a cellulose ester, more preferably added in an amount of 0.2 - 5 parts by weight, and still more preferably added in an amount of 0.5 - 2 parts by weight. These may be used in combination with at least two kinds.

In the case of a very small addition amount of an antioxidant, no effect can be produced since stabilization action is lowered during melting. Further, in the case of an excessive addition amount of the antioxidant, transparency desired for an optical film is lowered in view of compatibility with a cellulose ester, whereby brittleness of the optical film tends to be undesirably generated.

(Acid scavenger)

At high temperature where melting film formation of a cellulose ester is carried out, decomposition of a cellulose ester may also be accelerated with an acid. Therefore, an acid scavenger is preferably contained in an optical film of the present invention as a stabilizer. As the acid scavenger in the present invention, any compound reacting with an acid to inactivate the acid can be used with no limitation. Of these, preferable is, for example, a compound having an epoxy group as discribed in US Patent No. 4,137,201. Such the epoxy compound as an acid scavenger has been well known in the technical field, and examples thereof include glycidyl ether of various polyglycols, particularly polyglycol driven via condensation of approximately 8 - 40 moles of ethylene glycol per mole of the polyglycol, diglycidyl ether of glycerol, a metal epoxy compound (for example, ones usually used in a vinyl chloride polymer composition, or one usually used together with a vinyl chloride polymer composition), an epoxidized ether condensate, diglycidyl ether of bisphenol A (namely, 4,4'-dihydroxydiphenyldimethylmethane), an epoxidized unsaturated fatty acid ester (specifically, an ester of alkyl having 2 - 4 carbon atoms of a fatty acid having 2 - 22 carbon atoms such as butyl epoxystearate), and various epoxidized long chain fatty acid triglycerides (for example, epoxidized soybean oil, epoxidized linseed oil or the like). The examples further include an epoxidized plant oil or another unsaturated natural oil. The epoxide oils are sometimes called epoxidized natural glyceride or epoxidized unsaturated fatty acid, and these fatty acids each are generally contain 12 - 22 carbon atoms. Further, as a commercially available epoxy group-containing epoxide resin compound, EPON 815C and an epoxidized ether oligomer condensation product represented by Formula (I) are preferably employed.

Formula (I)

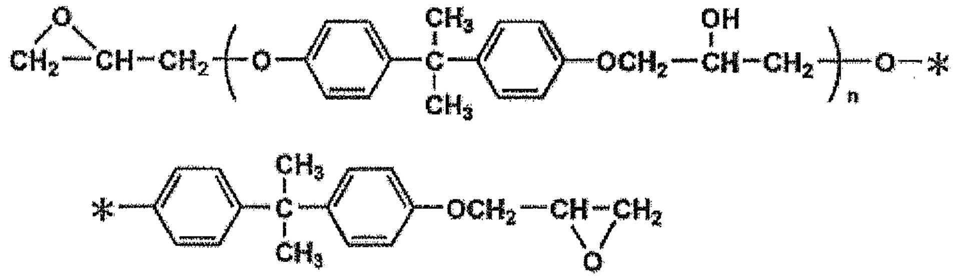

where n is an integer of 0 - 12.

As other usable acid scavengers, those described in paragraphs 87 - 105 of Japanese Patent O.P.I. Publication No. 5-194788 are included.

The addition amount of the acid scavenger is preferably 0.1 - 10 parts by weight, more preferably 0.2 - 5 parts by weight, and still more preferably 0.5 - 2% parts by weight. These are used in combination with at least two kinds.In addition, an acid scavenger is also referred to as an acid remover, an acid trapping agent, an acid catcher, but in the present invention, any of these agents can be used regardless of the difference in the address term.

{Compound represented by Formula (2)}

In order to control coloring of a film caused by heat during production, in an optical film of the present invention, a compound represented by foregoing Formula (2) is preferably added.

In foregoing Formula (2), each of $R_{12}$ - $R_{15}$ independently represents a hydrogen atom or a substituent. Substituents represented by $R_{12}$ - $R_{15}$ are not specifically limited, but examples thereof include an alkyl group (for example, a methyl group, an ethyl group, a propyl group, an isopropyl group, a t-butyl group, a pentyl group, a hexyl group, an octyl group, a dodecyl group, a trifluoromethyl group or the like); a cycloalkyl group (for example, a cyclopentyl group, a cyclohexyl group or the like); an aryl group (for example, a phenyl group, a naphthyl group or the like); an acylamino group (for example, an acetylamino group, a benzoylamino group or the like); an alkylthio group (for example, a methylthio group, an ethylthio group or the like); an arylthio group (for example, a phenylthio group, a naphthylthio group or the like); an alkenyl group (for example, a vinyl group, 2-propenyl group, a 3-butenyl group, a 1-methyl-3-propenyl group, a 3-pentenyl group, a 1-methyl-3-butenyl group, a 4-hexenyl group, a cyclohexenyl group or the like); a halogen atom (for example, a fluorine atom, a chlorine atom, a bromine atom, an iodine atom or the like); an alkinyl group (for example, a propargyl group or the like); a heterocyclic group (for example, a pyridyl group, a thiazolyl group, an oxazolyl group, an imidazolyl group or the like); an alkylsulfonyl group (for example, a methylsulfonyl group, an ethylsulfonyl group or the like); an arylsulfonyl group (for example, a phenylsulfonyl group, a naphthylsulfonyl group or the like); an alkylsulfinyl group (for example, a methylsulfinyl group or the like); an arylsulfonyl group (for example, a phenylsulfinyl group or the like); a phosphono group; an acyl group (for example, an acetyl group, a pivaloyl group, a benzoyl group or the like); a carbamoyl group (for example, an aminocarbonyl group, a methylaminocarbonyl group, a dimethylaminocarbonyl group, a butylaminocarbonyl group, a cyclohexylaminocarbonyl group, a phenylaminocarbonyl group, a 2-pyridylaminocarbonyl group or the like); a sulfamoyl group (for example, an aminosulfonyl group, a methylaminosulfonyl group, a dimethylaminosulfonyl group, a butylaminosulfonyl group, a hexylaminosulfonyl group, a cyclohexylaminosulfonyl group, an octylaminosulfonyl group, a dodecylaminosulfonyl group, a phenylaminosulfonyl group, a naphthylaminosulfonyl group, a 2-pyridylaminosulfonyl group or the like); a sulfonamide group (for example, a methanesulfonamide group, a benzene sulfonamide group or the like); a cyano group; an alkoxy group (for example, a methoxy group, an ethoxy group, a propoxy group or the like); an aryloxy group (for example, a phenoxy group, a naphthyloxy group or the like); a heterocyclic oxy group; a siloxy group; an acyloxy group (for example, an acetyloxy group, a benzoyloxy group or the like); a sulfonic acid group; a a sulfonic acid salt; an aminocarbonyloxy group; an amino group (for example, an amino group, an ethylamino group, a dimethylamino group, a butylamino group, a cyclopentylamino group, a 2-ethylhexylamino group, a dodecylamino group or the like); an anilino group (for example, a phenylammino group, a chlorophenylammino group, a toluidino group, an anisidino group, a naphthylamino group, a 2-pyridylamino group or the like), an imido group, a ureido group (for example, a methylureido group, an ethylureido group, a pentylureido group, a cyclohexylureido group, an octylureido group, a dodecylureido group, a phenylureido group, a naphthylureido group, a 2-pyridylamonoureido group or the like), an alkoxycarbonylamino group (for example, a methoxycarbonylamino group, a phenoxycarbonylamino group or the like), an alkoxycarbonyl group (for example, a methoxycarbonyl group, an ethoxycarbonyl group, a phenoxycarbonyl group or the like); an aryloxycarbonyl group (for example, a phenoxycarbonyl group or the like); a heterocyclic thio group; a thioureido group; a carboxyl group; a carboxylic acid salt; a hydroxyl group, a mercapto group; a nitro group; and so forth. These substituents may be further substituted with the similar substituents.

In foregoing Formula (2), each of $R_{12}$ - $R_{15}$ is preferably a hydrogen atom or an alkyl group.

In foregoing Formula (2), $R_{16}$ represents a hydrogen atom or a substituent, and as the substituent represented by $R_{16}$, the same group as a substituent represented by $R_{12}$ - $R_{15}$ can be provided.

In foregoing Formula (2), $R_{16}$ is preferably a hydrogen atom.

In foregoing Formula (2), n is 1 or 2.

In foregoing Formula (2), when n is 1, $R_{11}$ represents a substitute, and when n is 2, $R_{11}$ represents a divalent linkage group.

When $R_{11}$ represents a substituent, as the substituent, the same group as a substituent represented by $R_{12}$ - $R_{15}$ can be provided. When $R_{11}$ represents a divalent linkage group, examples of the divalent linkage group include an alkylene group which may have a substitute, an arylene group which may have a substitute, an oxygen atom, a nitrogen atom, a sulfur atom or a combination of these linkage groups.

In foregoing Formula (2), n is preferably 1, and in this case, a substituted or unsubstituted phenyl group is preferable. A phenyl group obtained via substitution of an alkyl group and an acyloxy group is further preferable.

Next, specific examples of the compound represented by Formula (2) in the present invention are exemplified, but the present invention is not limited by the following specific examples.

101

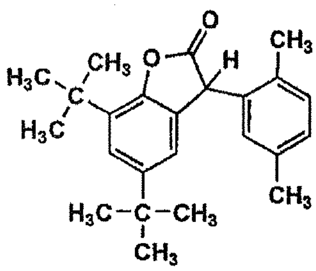

102

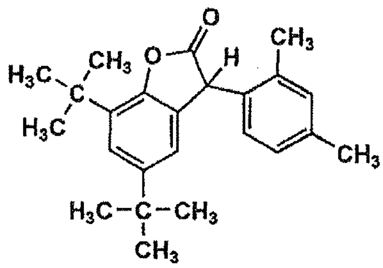

103

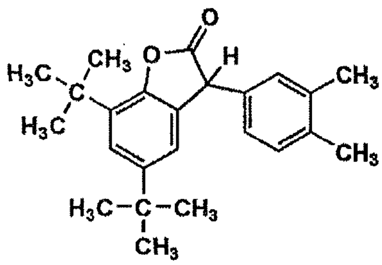

104

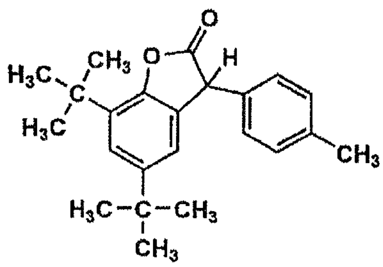

105

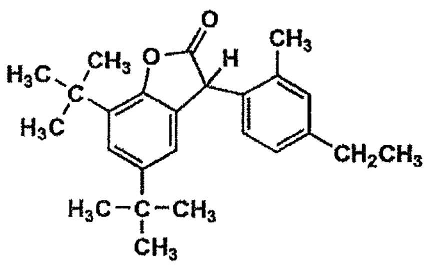

106

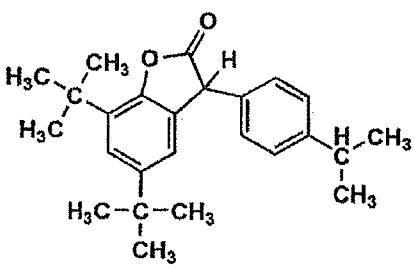

107

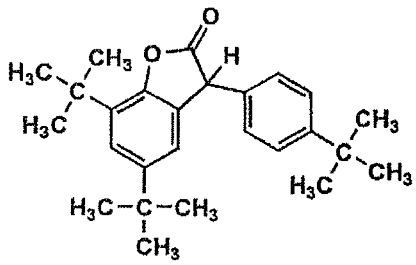

108

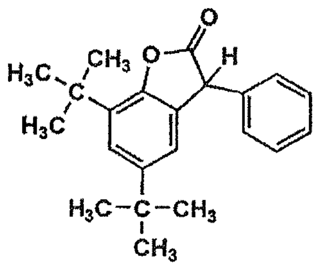

109

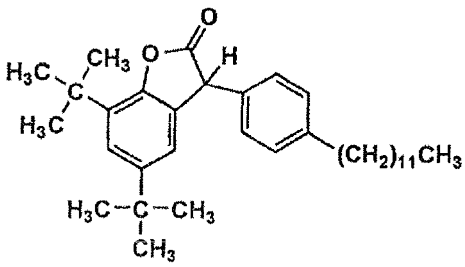

110

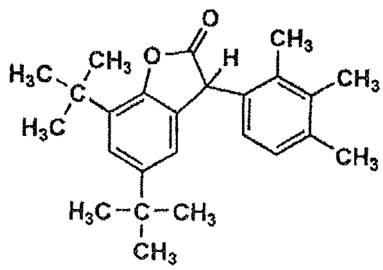

111

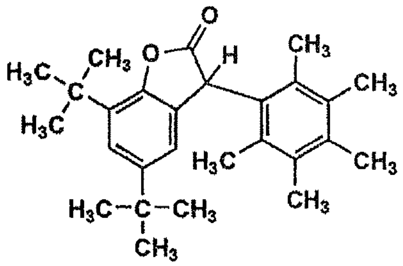

112

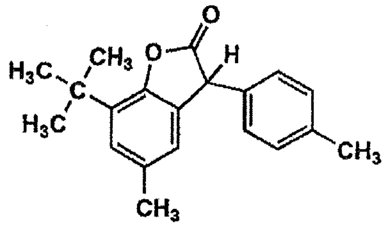

113

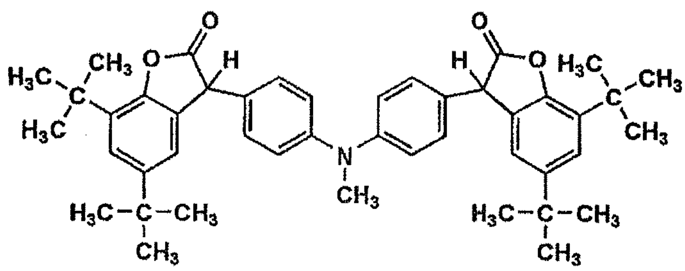

114

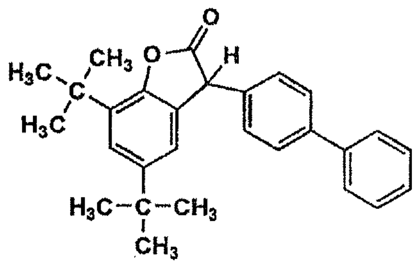

115

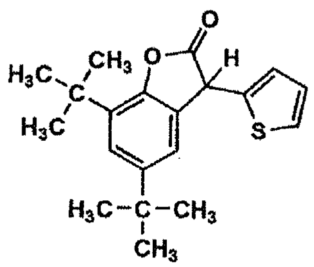

116

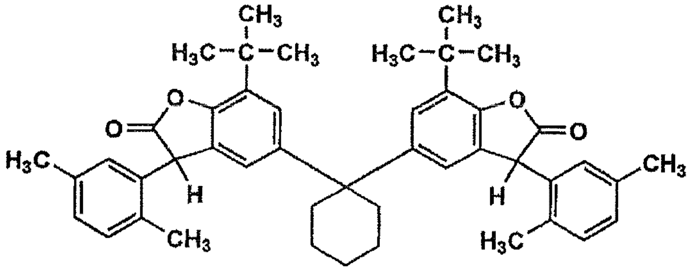

117

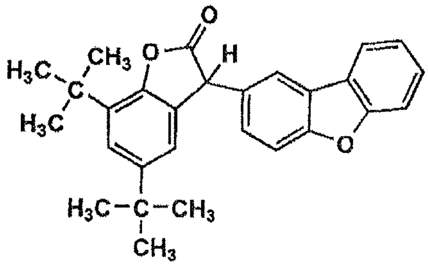

118

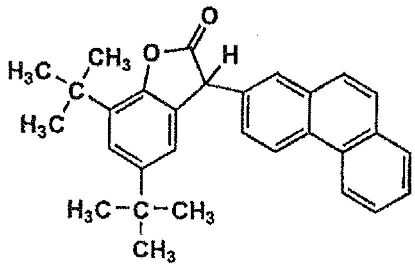

119

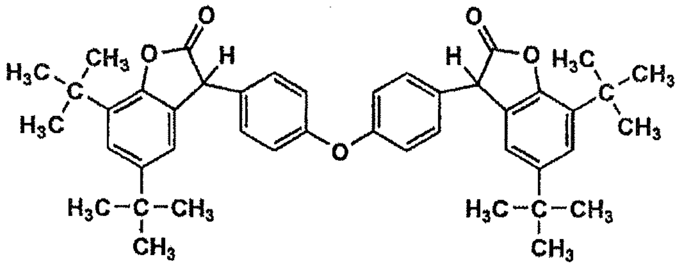

120

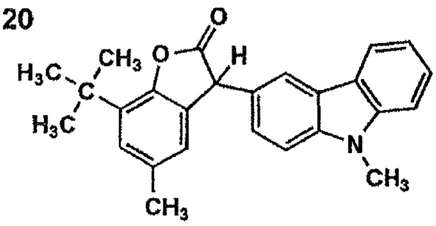

121

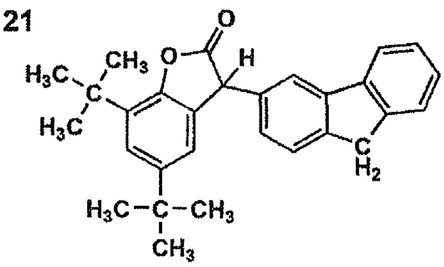

122

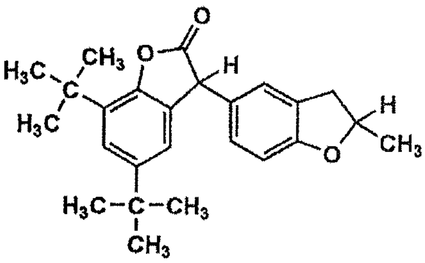

123

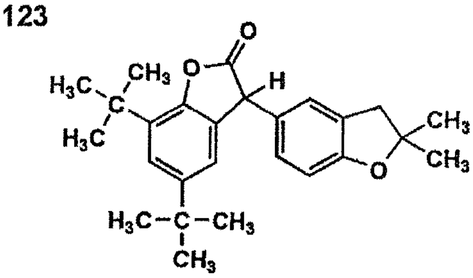

124

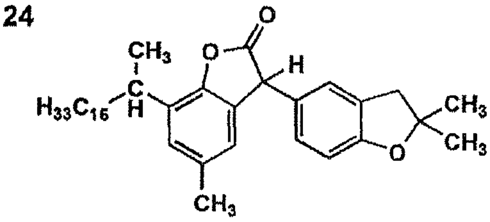

125

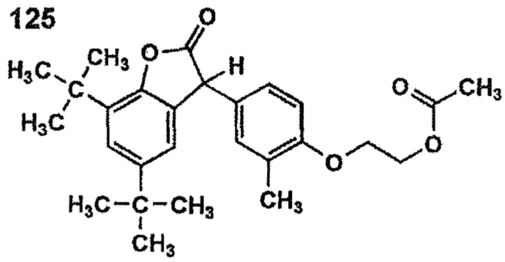

126

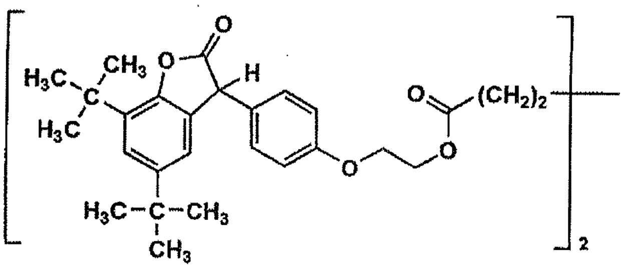

127

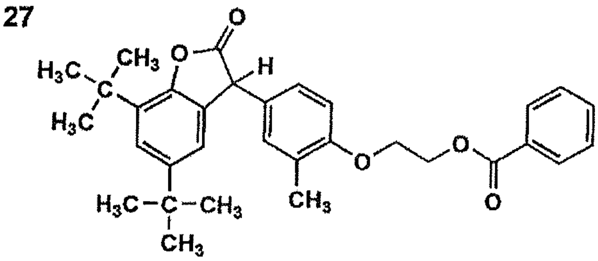

128

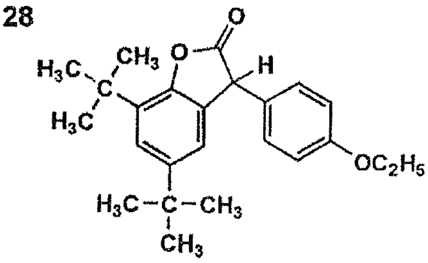

129

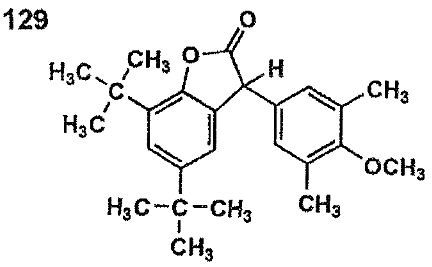

130

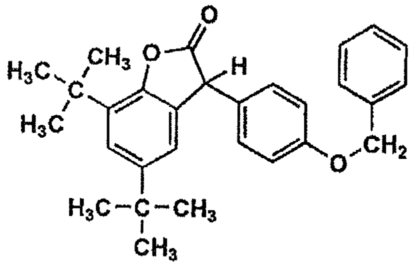

131

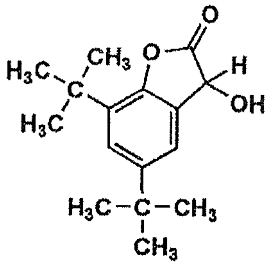

132

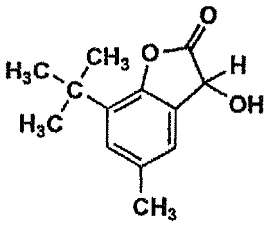

133

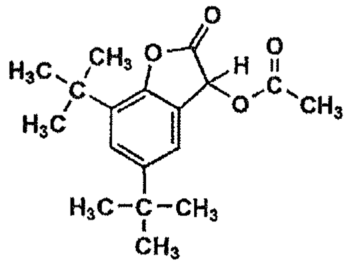

134

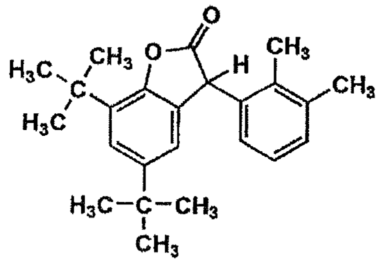

135

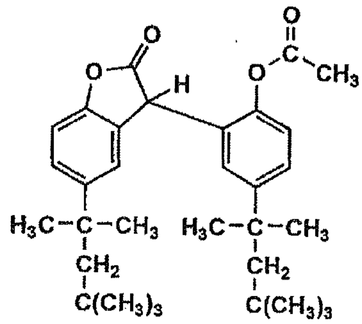

136

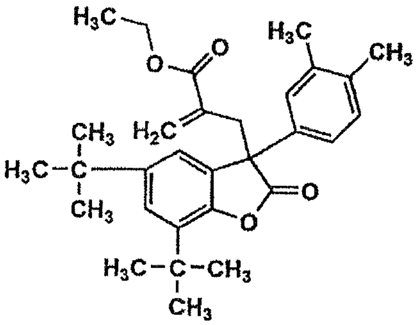

137

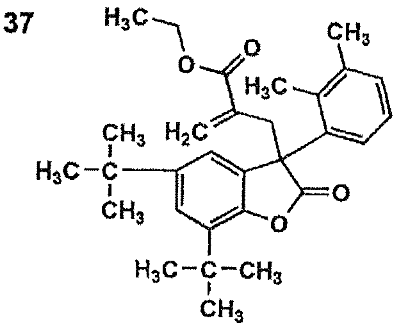

138

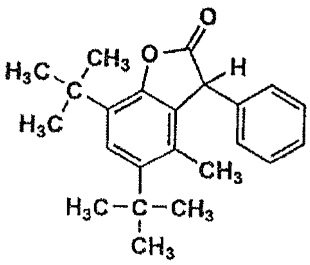

139

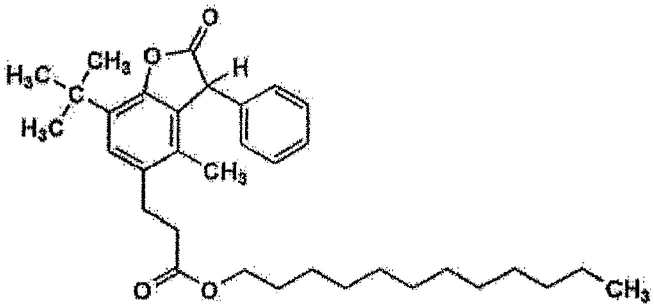

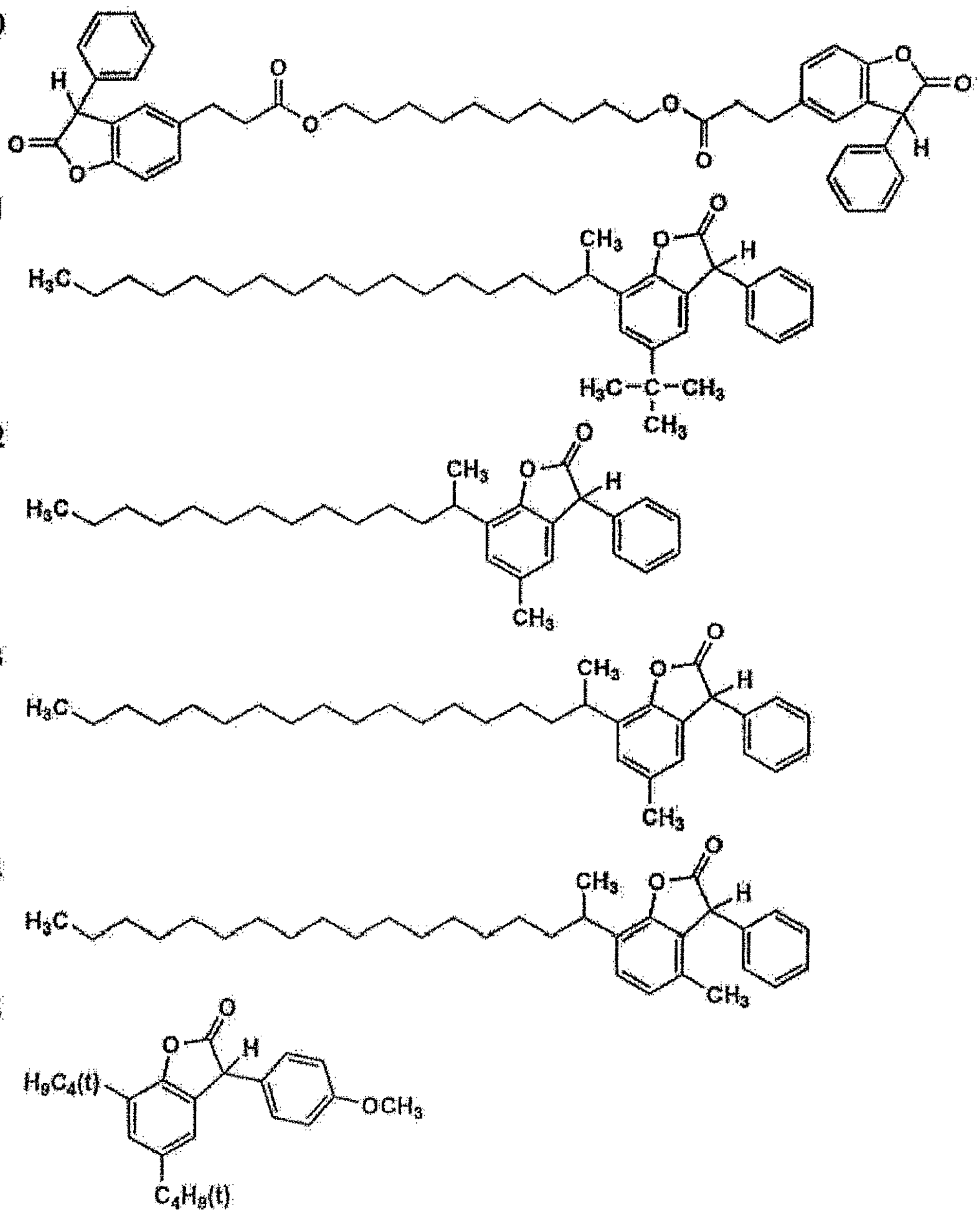

140

141

142

143

144

145

These compounds can be used singly or in combination with at least two kinds. The mixing amounts of the compounds are appropriately selected as long as the purpose of the present invention is not spoiled, but it is conventionally 0.001 - 10.0 parts by weight with respect to 100 parts by weight, preferably 0.01 - 5.0 parts by weight, and more preferably 0.1 - 3.0 parts by weight.

The cellulose ester of the present invention preferably includes at least one kind of additives before heat melting.

In the present invention, inclusion of additives means that not only additives are enclosed in the inside of cellulose ester, but also the additives exist in the inside as well as on the surface of cellulose ester at the same time.

As the method of including additives, provided is a method in which a cellulose ester is dissolved in a solvent, and subsequently, the additives are dissolved or finely dispersed in the resulting solution and the solvent is removed. Commonly known methods are used to remove the solvent, and examples thereof include a liquid drying method, an air drying method, a solvent co-precipitation method, a freeze-drying method, a solution casting method and so forth. The mixture of the cellulose ester and the additives after removing the solvent can be prepared so as to be in the form of powder, granules, pellets, a film or the like. The inclusion of additives is conducted by dissolving a solid cellulose ester as described before, but this may be carried out via precipitating solidification simultaneously in the step of synthesizing the cellulose ester.

In the liquid drying method, for example, an aqueous activator solution such as sodium lauryl sulfate is added

into a solution in which the cellulose ester and the additives are dissolved to conduct emulsion dispersion. Next, the solvent is removed via normal pressure or reduced pressure distillation to obtain a dispersion of the cellulose ester including the additives. In addition, centrifugal separation or decantation is preferably carried out in order to remove the activator. Various methods may be used as the emulsification method, and an emulsion homogenizer utilizing ultrasonic waves, high-speed rotational shearing and high pressure may preferably be used.

In the case of emulsion dispersion with ultrasonic waves, two methods such as a so-called batch system and continuous system are usable. The batch system is suitable for preparation of a comparatively small quantity, while the continuous method is suitable for preparation of a large quantity. In the case of the continuous system, an apparatus such as UH-600SR (manufactured by SMT Co., Ltd.) is usable. In the case of such the continuous system, time of exposure to ultrasonic waves can be determined by capacity of a dispersion chamber / flow rate x the number of circulation. In cases where there are a plurality of ultrasonic exposure apparatuses, it is determined as the total of each exposure time. A duration of exposure to ultrasonic waves is practically less than 10,000 seconds. Further, in the case of the duration of exposure to ultrasonic waves of at least 10,000 seconds, the processing load becomes large, and the actual emulsion dispersion time is desired to be shortened via selection of an emulsifier again. Therefore, the duration of at least 10,000 seconds is not preferred. It is further preferably 10 - 2,000 seconds.

A disperser mixer, a homogenizer, an ultra mixer or the like is usable as an emulsion homogenizer by high-speed rotational shearing, and these types are used as the situation demands depending on liquid viscosity during emulsion dispersion.

In the case of emulsion dispersion by high pressure, LAB2000 (manufactured by SMT Co., Ltd.) is usable, but the emulsion·dispersion capability depends on the pressure applied to a sample. A pressure of $10^4$ - 5 x $10^5$ kPa is preferable.

Usable examples of the activator include a cation surfactant, an anion surfactant, an amphoteric surfactant, a polymer dispersing agent and so forth. The activator is selected depending on the solvent and the particle diameter of an intended emulsion.

In the air drying method, a solution in which the cellulose ester and the additives are dissolved is sprayed employing a spray dryer such as GS310 (manufactured by Yamato Scientific Co., Ltd.), for example.

The solvent co-precipitation method is a method in which a solution in which the cellulose ester and the additives are dissolved is added into a poor solvent of the cellulose ester and the additives to make precipitation. The poor solvent can be optionally mixed with the foregoing solvent to dissolve the cellulose ester. The poor solvent may also be a mixed solvent. The poor solvent may also be added into a solution of the cellulose ester and the additives.

The admixture of the precipitated cellulose ester and the additives can be filtrated and dried for separation.

In the admixture of the cellulose ester and the additives, the additives in the admixture has a particle diameter of 1 $\mu$m or less, preferably has a particle diameter of 500 nm or less, and still more preferably has a particle diameter of 200 nm or less. The smaller the particle size of the additive, the more uniform the distribution in mechanical strength and optical property of the melt molded product is, and thus a smaller particle size is favorable.

(Matting Agent)

Particles are preferably added into the optical film of the present invention as a matting agent. Examples of inorganic compounds for particles employed in the present invention include silicon dioxide, titanium dioxide, aluminium oxide, zirconium oxide, calcium carbonate, talc, clay, calcinated caolin, calcinated calcium silicate, hydrated calcium silicate, aluminium silicate, magnesium silicate and calcium phosphate.

Silicon dioxide particles preferably have a primary particle average diameter of 5 - 16 nm, and more preferably have a primary particle average diameter of 5 - 12 nm. A smaller primary particle average diameter is preferable since haze is small. Further, the apparent specific gravity is preferably 90 - 200 g/L, and more preferably 100 - 200 g/L. The larger the apparent specific gravity is, the higher concentration of the dispersion is possible to be prepared, resulting preferably in improved haze and coagulated product.

An addition amount of the matting agent is preferably 0.01 - 1.0 g/$m^2$, more preferably 0.03 - 0.3 g/$m^2$, and more preferably 0.10 - 0.18 g/$m^2$.

Examples of silicon dioxide particles include AEROSIL R972, R972V, R974, R812, 200, 200V, 300, R202, OX50, TT600, NAX50 and so forth (produced by Nippon Aerosil Co., Ltd.), and KE-P10, KE-P30, KE-P100, KE-P150 and so forth (produced by Nippon Shokubai Co., Ltd.). Of these, AEROSIL 200V and AEROSIL R972V as silicon dioxide particles have a primary average particle diameter of 20 nm or less, and have an apparent specific gravity of at least 70 g/L, and those are preferable since reducing of a friction coefficient while keeping turbidity of the optical film low is largely effective. Further, AEROSIL NAX50, KE-P30 and KE-P100 are specifically preferable since reducing of a friction coefficient with a small amount of those is largely effective.

As zirconium oxide particles, for example, product name AEROSIL R976 and R811 (produced by Nippon Aerosil Co., Ltd.) commercially available are usable. Further, examples of the polymer include a silicone resin, a fluororesin, an

acrylic resin and so forth. Of these, a silicone resin having a structure of three-dimensional network is preferable. Commercially available and usable examples thereof include product name TOSPAL 103, 105, 108, 120, 145, 3120 and 240 (produced by Toshiba Silicone Co., Ltd.).

These particles preferably form secondary particles generally having an average particle diameter of 0.01 - 1.0 μm, more preferably having an average particle diameter of 0.1 - 0.8 μm, and most preferably having an average particle diameter of 0.2 - 0.5 μm. These particles are present in a film as an aggregate of primary particles and form an unevenness of 0.01 to 1.0 μm on the film surface. The content of these particles is preferably 0.005 - 0.3% by weight, based on the weight of the cellulose ester film, more preferably 0.05 - 0.2% by weight, and most preferably 0.1 - 0.2% by weight. These particles may be used in combination with at least two kinds.

(Retardation controlling agent)

In the optical film of the present invention, an optical compensation function can be provide to improve liquid crystal display quality by adding a retardation controlling agent into the film, by providing a liquid crystal layer via formation of an orientation layer, and by combining retardation originated from the liquid crystal layer with a polarizing plate protective film. As to a compound to be added to control the retardation, an aromatic compound containing at least two aromatic rings is also usable as a retardation controlling agent, described in European Patent No. 911,656 A2. Further provided is a rod-like compound described in Japanese Patent O.P.I. Publication No. 2006-2025. At least two aromatic compounds may also be used in combination. The aromatic ring of such an aromatic compound preferably includes not only an aromatic hydrocarbon ring but also an aromatic heterocycllic ring. An aromatic heterocyclic ring is generally an unsaturated heterocyclic ring. In particular, compounds having 1,3,5-triazine ring described in Japanese Patent O.P.I. Publication No. 2006-2026 are specifically preferred.

(Melt casting method)

A cellulose ester film utilized for an optical film of the present invention is preferably formed by a melt casting method.

A molding method via melt casting by heat melting without using a solvent (methylene chloride and so forth, for example) in the melt casting method is in more detail classified into a melt extrusion molding method, a press molding method, an inflation method, an injection molding method, a blow molding method and a stretch molding method. Of these, the melt extrusion molding method is preferable to obtain an optical film exhibiting excellent mechanical strength together with excellent surface accuracy and so forth.

Next, a method of manufacturing the optical film of the present invention will be described with reference to the melt molding extrusion method.

Fig. 1 is a schematic flow sheet showing the overall structure of the apparatus to manufacture a cellulose ester film of the present invention, and Fig. 2 is an enlarged view of the cooling roll portion from the casting die.

In the method of manufacturing the cellulose ester film shown in Fig. 1 and Fig. 2, a film material such as a cellulose resin or the like is mixed, then melt extrusion is conducted onto first cooling roll 5 from casting die 4 employing extruder 1. The resulting is circumscribed onto a total of three rolls consisting of first cooling roll 5, second cooling roll 7 and third cooling roll to be circumscribed in order. Then, cooling solidification is conducted to form film 10. With both ends gripped by stretching apparatus 12, film 10 peeled by peeling roll 9 is stretched across the width and wound by winding apparatus 16. In order to correct flatness, provided is touch roll 6 pressing a melt film sandwiched between touch roll 6 and the surface of first cooling roll 5. Touch roll 6 has an elastic surface and forms a nip with first cooling roll 5. The details of touch roll 6 will be described later.

The cellulose ester film can be prepared by setting the condition of melt extrusion to the same condition as that employed for thermoplastic resins such as other polyesters. The material is preferably dried in advance. A vacuum or depressurized dryer, dehumidified hot air dryer or the like is used to desirably dry the material until the moisture is reduced to 1000 ppm or less, and preferably reduced to 200 ppm or less. For example, the cellulose ester based resin having been dried under hot air, vacuum or reduced pressure is molten at an extruding temperature of about 200 through 300 °C employing extruder 1. Leaf disk type filter 2 is used to filter the material to remove foreign substances.

When the material is fed from a feed hopper (not illustrated) to extruder 1, the material is preferably placed in vacuum, reduced pressure or inert gas atmosphere to inhibit oxidation-decomposition.

When additives such as a plasticizer or the like are not mixed in advance, they may be kneaded in the course of extrusion. In order to add evenly, a mixer such as a static mixer or the like is preferably employed.

In the present invention, a cellulose resin and additives such as a stabilizer to be added, if desired, are preferably mixed prior to melting, and the cellulose resin and the additives are more preferably mixed prior to heating. A mixer may be used for mixing. Alternatively, mixing may be completed in the process of preparing the cellulose resin, as described above. As a utilized mixer, usable is a commonly known mixer such as a V-type mixer, a conical screw type mixer, a

horizontal cylindrical type mixer, a Henschel mixer, a ribbon mixer or the like.

After mixing the film constituting material as described above, the admixture may be directly molten employing extruder 1 to form a film, but alternatively, it is also possible to palletize the film constituting material, and then, the resulting pellets may be molten employing extruder 1 to form a film. Further, when the film constituting material contains a plurality of materials having different melting points, so-called patchy half-melts are possible to be produced once at the temperature wherein only the material having a lower melting point is molten, and the half-melts are put into extruder 1 to form a film. Further, when the film constituting material contains a thermally decomposable material, it is preferable that a film is directly formed without producing pellets, thereby reducing the melting frequency. Alternatively, a film is preferably produced after patchy half-melts have been formed, as described above.

Various types of commercially available extruders are usable as extruder 1, but a melt-knead extruder which may be a uniaxial extruder or a biaxial extruder is preferable. When producing a film directly without forming pellets from the film constituting material, a biaxial extruder is preferably used in order to maintain an adequate kneading degree, but a uniaxial extruder is also usable because of obtaining of a proper kneading degree when the screw is changed into a kneading type screw such as a Madoc screw, a Unimelt screw, a Dulmage screw or the like. When pellets or patchy half-melts are used as the film constituting material, both the uniaxial extruder and biaxial extruder are also usable.

In the cooling process inside extruder 1 and after extrusion, oxygen concentration is preferably reduced via substitution with inert gas such as nitrogen gas or the like, or via reduced pressure.

A melting temperature of the film constituting material inside extruder 1 is conventionally 150 - 300 °C, preferably 180 - 270 °C, and more preferably 200 - 250 °C, though the preferable condition depends on viscosity and a discharging amount of the film constituting material, and thickness of a sheet to be prepared. The melt viscosity during extrusion is 10 - 100000 poises, and preferably 100 - 10000 poises. The shorter retention time of the film constituting material in extruder 1 is preferred, and it is within five minutes, preferably within three minutes, and more preferably within two minutes. The retention time depends on the type of extruder 1 and the extrusion conditions, but it is possible to be reduced by adjusting a supply amount of the material, the L/D, the number of rotations of the screw and depth of the screw groove.

The shape, the number rotations of the screw and so forth of extruder 1 are appropriately selected in response to the viscosity and discharging amount of the film constituting material. In the present invention, a shear speed of extruder 1 is 1 - 10000/sec, preferably 5 - 1000/sec, and more preferably 10 - 100/sec.

Extruder 1 usable in the present invention can be available as a plastic extruder.

The film constituting material extruded from extruder 1 is fed to casting die 4, and extruded in the form of a film from the slit of casting die 4. Casting die 4 is not specifically limited as long as it is used to prepare a sheet or a film. The material of casting die 4 is exemplified by hard chromium, chromium carbonate, chromium nitride, titanium carbide, titanium carbonitride, titanium nitride, cemented carbide, ceramic (tungsten carbide, aluminum oxide or chromium oxide) or the like, which is to be sprayed or plated. Then they are subjected to surface processing, as exemplified by buffing and lapping with a grinder having a count of #1000 or later planar cutting (in the direction perpendicular to the resin flow) with a diamond wheel having a count of #1000 or higher, electrolytic grinding, and electrolytic complex grinding. The desired material in the lip portion of casting die 4 is the same as that of casting die 4. The surface accuracy of the lip portion is preferably 0.5S or less, and more preferably 0.2S or less.

The slit of casting die 4 is designed in such a way that the gap can be adjusted. This is shown in Fig. 3. Of a pair of lips forming slit 32 of flow casting die 4, one is flexible lip 33 exhibiting deformable, low rigidity, and the other is stationary lip 34. A lot of heat bolts 35 are arranged at a predetermined pitch across casting die 4, namely, along the length of slit 32. Each heat bolt 5 includes block 36 fitted with embedded electric heater 37 and a cooling medium passage, and each heat bolt 35 passes through block 36 in the vertical direction. The base of heat bolt 35 is fixed on die (main body) 31, and the end is brought into contact with the outer surface of flexible lip 33. While constantly cooling block 36, the input of embedded electric heater 37 is adjusted to increase or decrease the temperature of block 36, this adjustment causes thermal extension and contraction of heat bolt 35, resulting in displacement of flexible lip 33, whereby the film thickness is adjusted. A thickness gauge is provided at a predetermined position in the wake flow of the die. The web thickness information detected by this gauge is fed back to the control apparatus. This thickness information is compared with the preset thickness information of the control apparatus, whereby power of a heating member of the heat bolt, or an ON-rate thereof can be controlled by the signal for a correction control amount sent from this apparatus. The heat bolt preferably has a length of 20 - 40 cm, and a diameter of 7 - 14 mm. A plurality of heat bolts, for example, several tens of heat bolts are preferably arranged at a pitch of 20 - 40 mm. A gap adjusting member fitted with mainly a bolt to adjust a slit gap via manual movement in the axial direction may be provided in place of a heat bolt. The slit gap adjusted by the gap adjusting member conventionally has a diameter of 200 - 1000 μm, preferably 300 - 800 μm, more preferably 400 - 600 μm.

The first through third cooling roll is made of a seamless steel tube having a wall thickness of about 20 - 30 mm. The surface is preferably mirror finished. A tube to feed a coolant is provided in the inside, and heat is preferably designed to be absorbed from a film on the roll by the coolant running through the tube.

On the other hand, touch roll 6 brought into contact with first cooling roll 5 has an elastic surface, and is deformed along the surface of first cooling roll 5 via pressing force toward first cooling roll 5 to form a nip between this roll and first roll 5.

Fig. 4 is a schematic cross section showing one embodiment of touch roll 6 (hereinafter, referred to as touch roll A). As shown in the figure, touch roll A is composed of elastic roller 42 arranged inside flexible metal sleeve 41.

Metal sleeve 41 is made of stainless steel having a thickness of 0.3 mm, and exhibits flexibility. When metal sleeve 41 is too thin, strength is insufficient. In contrast, when it is too thick, elasticity is insufficient. Thus, metal sleeve 41 preferably has a thickness of 0.1 - 1.5 mm. Elastic roller 42 is a roll formed by providing rubber 44 on the surface of metallic inner sleeve 43 freely rotatable through a bearing. When touch roll A is pressed toward first cooling roll 5, elastic roller 42 presses metal sleeve 41 against first cooling roll 5, and metal sleeve 41 and elastic roller 42 are deformed in response to the adjusted shape with respect to the shape of first cooling roll 5 to form a nip between this roll and the first cooling roll. Cooling water 45 is fed into the space formed inside metal sleeve 41 with elastic roller 42.

Fig. 5 and Fig. 6 show touch roll B as another embodiment of the pressing rotary member. Touch roll B is mainly formed from outer sleeve 51 made of flexible, seamless stainless steel tube (having a thickness of 4 mm), and metal inner sleeve 52 exhibiting high rigidity placed coaxially inside outer sleeve 51. Coolant 54 is led into space 53 between outer sleeve 51 and inner sleeve 52. Touch roll B is specifically formed in such a way that outer sleeve supporting flanges 56a and 56b are mounted on rotary shafts 55a and 55b on both ends, and thin-walled metal outer sleeve 51 is mounted between the outer peripheral portions of outer sleeve supporting flanges 56a and 56b. Fluid supply tube 59 is arranged coaxially inside fluid outlet port 58 to form fluid return passage 57 after being formed on the shaft center of rotary shaft 55a, and fluid supply tube 59 is connected and fixed to fluid shaft sleeve 60 arranged on the shaft center which is arranged inside thin-walled metal outer sleeve 51. Inner sleeve supporting flanges 61a and 61b are mounted on both ends of fluid shaft sleeve 60, respectively. Metal inner sleeve 52 having a wall thickness of about 15 - 20 mm is mounted in the range from the position between the outer peripheral portions of inner sleeve supporting flanges 61a and 61b to outer sleeve supporting flange 56b on the other end. For example, coolant flow space 53 of about 10 mm is formed between metal inner sleeve 52 and thin-walled metal outer sleeve 51. Outlet 52a and inlet 52b communicating between flow space 53 and intermediate passages 62a and 62b outside inner sleeve supporting flanges 61a and 61b are formed on metal inner sleeve 52 close to both ends, respectively.

In order to provide plasticity, flexibility and restoring force like those of rubber, outer sleeve 51 is designed to be thin within the range allowed by the thin cylinder theory of elastic mechanics. The flexibility evaluated with the thin cylinder theory of elastic mechanics is expressed by wall thickness t / roll radius r, and the smaller t/r, the higher flexibility is. The flexibility of this touch roll B meets the optimum condition when $t/r \leq 0.03$. Conventionally, a commonly usable touch roll has roll diameter R = 200 - 500 mm (roll radius r = R/2), roll effective width L = 500 - 1600 mm, and a widthwise long shape of $r/L < 1$. As shown in Fig. 6, for example, when roll diameter R = 300 mm and the roll effective width L = 1200 mm, the suitable range of wall thickness t is 150 x 0.03 = 4.5 mm or less, but when pressing force is applied to a molten sheet width of 1300 mm at an average linear pressure of 98 N/cm, the wall thickness of the outer sleeve 51 is 3 mm, and then, the corresponding spring constant becomes the same as that of the rubber roll of the same shape. Nip width k of the nip between outer sleeve 51 and the cooling roll in the direction of roll rotation is about 9 mm. This gives a value approximately close to the nip width of this rubber roll to be about 12 mm, confirming that pressure can be applied under the similar conditions. In addition, the amount of deflection in nip width k is about 0.05 - 0.1 mm.

Herein, $t/r \leq 0.03$ has been assumed, but in the case of conventional roll diameter R = 200 - 500 mm, sufficient flexibility is obtained specifically in the range of 2 mm $\leq t \leq$ 5 mm, and wall thickness can also be reduced easily via machining. Thus, this can be a very practically usable range. In the case of a wall thickness of 2 mm or less, high-precision machining cannot be conducted because of elastic deformation during processing of the step.

The conversion value of this 2 mm $\leq t \leq$ 5 mm is expressed by $0.008 \leq t/r \leq 0.05$ with respect to a conventional roll diameter, but in practice, under the conditions of $t/r \approx 0.03$, the wall thickness may preferably be increased in proportion to the roll diameter. For example, a range of t = 2 - 3 mm is selected in the case of roll diameter R = 200; and a range of t = 4 - 5 mm is selected in the case of roll diameter R = 500.

These touch rolls A and B are energized toward the first cooling roll by the energizing section. The F/W (linear pressure) obtained by dividing energizing force F of energizing section by width W of a film in a nip along the rotary shaft of first cooling roll 5 is preferably set at 9.8 - 147 N/cm. According to the present embodiment, the nip is formed between touch rolls A and B, and first cooling roll 5, and flatness may be corrected while the film passes through this nip. Thus, in comparison to cases where the touch roll is made of a rigid body, and no nip is formed between the touch roll and the first cooling roll, the film is sandwiched and pressed at a smaller linear pressure for a long duration, and this arrangement ensures more reliable correction of flatness. That is, in the case of a linear pressure of smaller than 9.8 N/cm, a die line cannot be removed sufficiently. In contrast, in the case of a linear pressure of larger than 147 N/cm, the film cannot easily pass through the nip, whereby this generates uneven thickness of the film.

The surfaces of touch rolls A and B are made of metal. This provides smooth surfaces of touch rolls A and B in comparison to cases where touch rolls have rubber surfaces. Elastic body 44 of elastic roller 42 can be made of ethylene propylene rubber, neoprene rubber, silicone rubber or the like.

In order to ensure that the die line is removed sufficiently by touch roll 6, it is preferable that film viscosity should fall within the appropriate range when the film is sandwiched and pressed by touch roll 6. Further, in the case of a cellulose ester, change in viscosity is known to be largely affected by temperature. Thus, in order to set the viscosity within an appropriate range when the cellulose ester film is sandwiched and pressed by touch roll 6, it is preferable to set the film temperature within the appropriate range when the cellulose ester film is sandwiched and pressed by touch roll 6. When a glass transition temperature of the cellulose ester film is designated as Tg, temperature T of a film immediately before the film is sandwiched and pressed by touch roll 6 is preferably set so as to satisfy $Tg < T < Tg + 110$ °C. In the case of a film temperature T of lower than Tg, viscosity of the film is too high, whereby the die line can not be corrected. In contrast, in the case of a film temperature T of higher than Tg + 110 °C, the film surface does not adhere evenly to the roll, whereby the die line is difficult to be corrected. $Tg + 10$ °C $< T < Tg + 90$ °C is preferable, and $Tg + 20$ °C $< T < Tg + 70$ °C is more preferable. In order to set the film temperature within the appropriate range when the cellulose ester film is sandwiched and pressed by touch roll 6, adjusted may be length L of the nip between first cooling roll 5 and touch roll 6 along the rotating direction of first cooling roll 5, from position P1 where the melt pressed out of casting die 4 is brought into contact with first cooling roll 5.

In the present invention, examples of the material preferably used for first roll 5 and second roll 6 include carbon steel, stainless steel, a resin and so forth. The high surface accuracy is preferable, and in terms of surface roughness, it is preferably set to 0.3S or less, and more preferably set to 0.01S or less.

In the present invention, the portion from the opening (lip) of casting die 4 to first roll 5 is reduced to a pressure of 70 kPa or less, whereby it has been found out that the correction effect of the die line is largely produced. A reduced pressure of 50 - 70 kPa is preferable. The method of keeping the pressure in the portion from the opening (lip) of casting die 4 to first roll 5 so as to be at 70 kPa or less is not specifically limited, but one of the methods is to reduce the pressure by covering the periphery from casting die 4 to the roll with a pressure resistant member. In this case, a suction apparatus itself is preferably heated by a heater or the like in such a way that no sublimate is deposited on the suction apparatus. In the present invention, when the suction pressure is too small, since the sublimate cannot be sucked effectively, an appropriate suction pressure should be applied.

In the present invention, the film-shaped cellulose ester based resin in a molten state from T-die 4 is conveyed in contact with first roll (the first cooling roll) 5, second cooling roll 7, and third cooling roll 8 in order, and is cooled and solidified, whereby unstretched cellulose ester based resin film 10 is preferably obtained.

In an embodiment of the present invention shown in Fig. 1, unstretched film 10 having been cooled, solidified and separated from third cooling roll 8 with peeling roll 9 is passed through dancer roll (film tension adjusting roll) 11, and led to stretching machine 12, where film 10 is stretched in the lateral direction (across the width). This stretching operation orients molecules in the film.

A commonly known tender or the like can be preferably employed for a method of stretching a film in the direction of the width. Specifically, when the film is stretched in the direction of the width, it is preferable that lamination conducted with a polarizing film can be realized in the form of a roll. When stretching is conducted in the width direction, the slow axis of a cellulose ester film composed of a cellulose ester based resin film is found to be in the width direction.

On the other hand, conventionally, the transmission axis of a polarizing film is also in the width direction. When the polarizing plate multilayered in such a manner that the transmission axis of a polarizing film and the slow axis of an optical film are parallel to each other is installed in a liquid crystal display device, high display contrast of the liquid crystal display device together with an excellent viewing angle is obtained.

Glass transition temperature Tg of a film constituting material can be controlled by changing the kinds of the material constituting the film and the ratio of constituting materials. When a retardation film is manufactured as a cellulose ester film, Tg is at least 120 °C, and preferably at least 135 °C. In a liquid crystal display device, the film temperature environment is changed under the image display mode via rise in temperature of the apparatus per se, for example, rise in temperature originated from a light source. In this case, when Tg of the film is lower than temperature in the use environment of the film, the retardation value and the dimensional shape as a film originated from an orientation state of molecules fixed in the film by stretching are largely to be changed. When Tg of the film is too high, thermal energy consumption becomes high since temperature rises when a film is formed from a film constituting material, and further, the material per se tends to be decomposed during film formation, and this tends to produce coloring. Thus, Tg is preferably 250 °C or less.

The cooling and relaxation treatment may be conducted under the commonly known thermally fixing condition for a stretching process, and these may be appropriately adjusted so as to obtain properties desired for the intended optical film.

The above-described stretching process and the thermally fixing treatment are conducted via appropriate selection in order to provide the retardation film function for the purpose of improving matter properties of the retardation film and widening the viewing angle of a liquid crystal display device. When such the stretching process and the thermally fixing process are included, the heating and applied pressure process should be conducted prior to the stretching process and the thermal fixing treatment.

When a retardation film is produced as a cellulose ester film, and functions of a polarizing plate protective film are further combined, the refractive index is possible to be controlled via stretching operation. A method of stretching operation is also preferable, though the refractive index is desired to be controlled. Next, the stretching method will be described.

In a process of stretching a retardation film, desired retardations Ro and Rth can be controlled via stretching at a magnification of 1.0 - 2.0 times in one direction of the cellulose resin, and at a magnification of 1.01 - 2.5 times in the direction perpendicular to the in-plane of a film. Herein, Ro representing an in-plane retardation is obtained by multiplying the thickness by the difference between a refractive index in the in-plane longitudinal direction MD and a refractive index in the width direction TD. Rth representing the retardation in the thickness direction is obtained by multiplying the thickness by the difference between an in-plane refractive index (average of the values in the longitudinal direction MD and in the width direction TD) and a refractive index in the thickness direction.

Stretching can be carried out sequentially or simultaneously, for example, in the longitudinal direction of a film and in the direction perpendicular thereto in the in-plane of the film, that is, in the width direction. In this case, when the stretching magnification in one direction is too small, insufficient retardation is obtained, and when it is excessive, stretching becomes difficult, whereby the film tends to be broken.

Stretching in the biaxial directions perpendicular to each other is an effective way to fall refractive indexes nx, ny and nz of the film within the range of a predetermined range. Herein, nx represents a refractive index in the longitudinal direction MD, ny represents a refractive index in the width direction TD, and nz represents a refractive index in the thickness diection.

In the case of stretching in the melt casting direction, the value of nz becomes excessive when shrinkage in the width direction is too large. In this case, it can be improved by controlling shrinkage of the film in the width direction, or by stretching it in the width direction. In the case of stretching in the width direction, a distribution in refractive index tends to be generated the refractive in the width direction. This distribution often appears when a tenter method is utilized, and is a phenomenon generated when Stretching of the film in the width direction causes shrinkage force generated in the central portion of the film, and the end portions are fixed. This is called so-called bowing phenomenon. In this case, the bowing phenomenon can be controlled by stretching in the casting direction, whereby distribution in phase difference in the width direction can be reduced.

Stretching in the biaxial directions perpendicular to each other reduces fluctuation in thickness of the resulting film. When fluctuation in thickness of the retardation film is too large, unevenness in phase difference is generated, and when utilizing a liquid crystal display, unevenness in coloring or the like tends to produce a problem.

Fluctuation in thickness of a cellulose ester film is preferably set in the range of $\pm 3\%$, and more preferably set in the range of $\pm 1\%$. In order to achieve the foregoing object, it is effective to use a method of stretching in the biaxial directions perpendicular to each other. The stretching magnification in the biaxial directions perpendicular to each other is preferably 1.0 - 2.0 times in the casting direction, and 1.01 - 2.5 times in the width direction, but more preferably 1.01 - 1.5 times in the casting direction, and 1.05 - 2.0 times in the width direction in order to obtain the desired retardation value.

When the absorption axis of a polarizer is present in the longitudinal direction, the transmission axis of the polarizer is coincident with the width direction. In order to obtain a lengthy polarizing plate, a retardation film is preferably stretched so as to have a slow axis in the width direction.

When employing a cellulose ester to obtain positive birefringence with respect to stress, stretching in the width direction can provide a slow axis of the retardation film in the width direction via the above-described structure. In this case, in order to improve display quality, the slow axis of the retardation film is preferably located in the width direction. In order to obtain an intended retardation value, the following condition is preferably satisfied:

(Stretching magnification in the width direction) > (stretching magnification in the casting direction)

After stretching, ends of a film are trimmed off with slitter 13 so as to give a width of the product. Then both ends of the film are preferably knurled (embossed) by a knurling apparatus equipped with emboss ring 14 and back roll 15, and the film is wound by winder 16 to prevent sticking in cellulose ester film F (stock roll) and generation of scratches. The knurling process can be provided by heating and pressing a metal ring having a pattern of projections and depressions at end portions of the film. In addition, since the gripping portions of the clips on both ends of the film are usually deformed and cannot be used as a film product, they are cut and removed to be recycled as a raw material.

In a process of winding a film, the film is wound on the winding roll while keeping constant the shortest distance between the outer peripheral surface of a cylinder-shaped wounding film and the outer peripheral surface of a traveling type conveyance roll immediately before the forgoing. Further, before the winding roll, provided is a discharging blower or the like to remove or reduce potential of the film surface.

The winding apparatus to prepare an optical film of the present invention may be one commonly used. The film can be wound by a winding method such as a constant tension method, a constant torque method, a taper tension method, a program tension control method with constant internal stress or the like. In addition, the initial winding tension

during winding of the optical film is preferably 90.2 - 300.8 N/m.

In the film winding process of the present invention, the film is preferably wound at a temperature of 20 - 30 °C and a relative humidity of 20 - 60%RH. When temperature and humidity in the film winding process are specified in such the way, durability of retardation (Rt) in the width direction against humidity change is improved.

In the case of a temperature of less than 20 °C in the winding process, wrinkles are generated, whereby an undesired practical problem is caused because of degradation of film winding quality. In the case of a temperature exceeding 30 °C in the film winding process, wrinkles are also generated, whereby an undesired practical problem is also caused because of degradation of film winding quality.

In the case of a humidity of less than 20%RH in the film winding process, electrification is easily produced, whereby an undesired practical problem is caused because of degradation of film winding quality. In the case of a humidity exceeding 60%RH in the film winding process, undesired problems such as degradation in winding quality and conveyance together with sticking failure are produced.

As a winding core in cases where an optical film is wound in the form of a roll, it may be one made of any material, as long as it is a cylinder-shaped core, but a hollow plastic core is preferable. The plastic material may be any plastic, provided that it is a heat resistant plastic material capable of withstanding the heat treatment temperature, and examples thereof include a phenol resin, a xylene resin, a melamine resin, a polyester resin, an epoxy resin and so forth. Further, a thermosetting resin reinforced with a filler such as a glass fiber or the like is preferable. As a hollow plastic core, for example, utilized is a winding core made of FRP having an outer diameter of 6 inches (hereinafter, one inch equivalent to 2.54 cm) and an inner diameter of 5 inches.

The number of turns on this winding core is preferably at least 100, and more preferably at least 500. The winding thickness is preferably at least 5 cm. The film substrate preferably has a width of at least 80 cm, and more preferably has a width of at least 1 m.

The manufacturing advantages provided by the present invention are noteworthy especially in winding roll with a film having a length of at least 100 m and a width of at least 1.35 m. The longer film having a length of 1500 m, 2500 m, 5000 m or the like and the wider film having a width of 2 m, 4 m or the like, the higher advantages in manufacturing the optical film are produced.

In the preparation of an optical film in the present invention, the roll length is preferably 10 - 5000 m in view of productivity and conveyance, and more preferably 50 - 4500 m. In this case, as the width of the film, a width suitable for the width of a polarizer and the production line can be selected, but a film having a width of 0.5 - 4.0 m, and preferably having a width of 0.6 - 3.0 m is preferably prepared, and wound in the form of a roll.

«optical film»

The optical film of the present invention refers to a functional film employed in various display devices such as a liquid crystal display, a plasma display, an organic EL display or the like, and specific examples thereof include a polarizing plate protective film, a retardation film, an antireflective film, a luminance enhancing film, a hard coat film an antiglare film, an antistatic film, an optical compensation film to enlarge a viewing angle and so forth, which may be utilized for liquid crystal display devices.

The optical film of the present invention is preferably usable for a polarizing plate protective film, a retardation film and an optical compensation film, and more preferably usable for a polarizing plate protective film.

In cases where the retardation film is used as a polarizing plate protective film, the protective film preferably has a thickness of 10 - 500 μm. Specifically, the lower limit is at least 20 μm, and preferably at least 35 μm. The upper limit is 150 μm or less, and preferably 120 μm or less. The particularly preferred range is 25 - 90 μm. When the retardation film is too thick, a polarizing plate after processing the polarizing plate becomes too thick, and is not suitable for the thin-model, light weight configuration in the case of a liquid crystal display used in a notebook PC or mobile electronic devices. On the other hand, when the retardation film is too thin, difficulties will become involved in the retardation as a retardation film. This results further in high moisture permeability in the film, whereby capability to protect a polarizer against humidity is undesirably degraded.

Assuming that the slow axis or high axis of a retardation film lies in a plane of the film, and an angle formed with respect to the film making direction is θ1, θ1 is designed to be in the range of -1° and +1°, and preferably in the range of -0.5° and +0.5°.

This θ1 can be defined as an orientation angle, and the θ1 can be measured with a birefringent meter KOBRA-21ADH (manufactured by Oji Scientific Instruments Co. Ltd.).

The θ1 satisfying the above-described relation contributes to enhanced luminance of display images as well as reduction or prevention of light leakage, and contributes also to reliable color reproduction in a color liquid crystal display device.

When the retardation film is used in a multidomain-formed VA mode, placement of the retardation film contributes to improved display image quality when the fast axis of the retardation film is placed in the above-described region as

$\theta 1$. When placed in a MVA mode as a polarizing plate and a liquid crystal display device, the structure may be allowed as shown in Fig. 7.

In Fig. 7, each of numerals 21a and 21b represents a protective film, each of numerals 22a and 22b represents a retardation film, each of numerals 25a and 25b represents a polarizer, each of numerals 23a and 23b represents the slow axis direction of a film, each of numerals 24a and 24b represents the transmission axis direction of a polarizer, each of numerals 26a and 26b represents a polarizing plate, numeral 27 represents a liquid crystal cell, and numeral 29 represents a liquid crystal display device.

A distribution of retardation Ro in the in-plane direction of an optical film is preferably adjusted to 5% or less, more preferably adjusted to 2% or less, and still more preferably adjusted to 1.5% or less. Further, a distribution of retardation Rt in the thickness direction of the film is preferably adjusted to 10% or less, more preferably adjusted to 2% or less, and still more preferably adjusted to 1.5% or less.

In the retardation film, smaller fluctuation in distribution of the retardation value is preferable. When a polarizing plate possessing a retardation film is used in an liquid crystal display device, small fluctuation in distribution of the retardation is preferable in view of prevention of color unevenness.

The retardation film is adjusted so as to possess the retardation value suitable for improved display quality of a liquid crystal cell in the VA or TN mode. Specifically, in order to be used for the MVA mode via division into the above-described multidomain as the VA mode, to be preferably used in the MVA mode, in-plane retardation Ro is desired to be adjusted in the range of 30 - 95 nm, and retardation Rt in the thickness direction is desired to be adjusted in the range of 70 - 400 nm.

When the above-described in-plane retardation Ro is composed of the structure shown in Fig. 7, for example, in which two polarizing plates are placed in a crossed-Nicols arrangement and a liquid crystal cell is placed between the polarizing plates, a deviation from the crossed-Nicols state of the polarizing plate is generated when observed at an angle from the direction normal to the display surface, in the case of the state of crossed-Nicols based on observation from the direction normal to the display surface. Light leakage caused by this is mainly compensated. The retardation in the thickness direction contributes in order to mainly compensate bifringence of the liquid crystal cell observed as viewed obliquely in the same manner when the liquid crystal cell is in the black display mode in the above-described TN and VA modes, specifically in the MVA mode.

When two polarizing plates are placed above and below a liquid crystal cell in a liquid crystal display device as shown in Fig. 7, 22a and 22b in the figure are capable of selecting the arrangement of retardation Rt in the thickness direction. The foregoing range is preferably satisfied, and the total of both retardations Rt in the thickness direction is preferably 140 - 500 nm. Herein, in-plane retardation Ro and retardations Rt in the thickness direction in 22a and 22b are both identical for the purpose of improving the industrial productivity of polarizing plates. It is particularly preferred that in-plane retardation Ro of 35 - 65 nm and retardation Rt in the thickness direction of 90 - 180 nm are applied for the liquid crystal cell in the MVA mode as shown in Fig. 7.

As to the liquid crystal display device, when a TAC film having a thickness of 35 - 85 μm with in-plane retardation Ro of 0 - 4 nm and retardation Rt in the thickness direction of 20 - 50 nm is employed, for example, at the position of 22b shown in Fig. 7 for one of the polarizing plates as a commercially available polarizing plate protective film, a polarizing film arranged for the other polarizing plate, for example, a retardation film placed in 22a shown in Fig. 7 should have in-plane retardation Ro of 30 - 95 nm and retardation Rt in the thickness direction of 140 - 400 nm. This is advantageous for improving display quality and productivity of films.

«Polarizing plate»

In cases where a cellulose ester film of the present invention is employed as a polarizing plate protective film, the method of manufacturing a polarizing plate is not specifically limited, and it can be prepared by a conventional method. It is preferable that the back surface side of a cellulose ester film in the present invention is subjected to an alkali saponification treatment, and the treated cellulose ester film is attached onto at least one surface of the polarizing film having been prepared via immersion stretching in an iodine solution employing an aqueous solution of completely saponified polyvinyl alcohol. A cellulose ester film of the present invention may be provided, and another polarizing plate protective film may also be provided on the other surface. As the polarizing plate protective film provided on the other surface with respect to a cellulose ester film of the present invention, commercially available cellulose ester films are usable. Preferable examples of the commercially available cellulose ester films include KC8UX2M, KC4UX, KC5UX, KC4UY, KC8UY, KC12UR, KC8UCR-3, KC8UCR-4, KC8UY-HA and KC8UX-RHA (produced by Konica Minolta Opto, Inc.). Alternatively, it is also preferable to use a polarizing plate protective film which also serves as an optical compensation film having an optical anisotropic layer formed by orientating a liquid crystal compound such as a discotic liquid crystal, a rod-shaped liquid crystal, a cholesteric liquid crystal or the like. For example, the optical anisotropic layer can be formed by a method described in Japanese Patent O.P.I. Publication No. 2003-98348. A polarizing plate exhibiting excellent flatness and a stable viewing angle enlarging effect can be obtained by utilizing an optical film of the present

invention in combination. Further, a film made of a cyclic olefin resin, an acrylic resin, polyester, polycarbonate or the like other than a cellulose ester film may be used as a polarizing plate protective film provided on the other surface.

The polarizing plate may be processed via an adhesion promoting treatment disclosed in Japanese Patent O.P.I. Publication Nos. 6-94915 and 6-118232, in place of the above-described alkaline treatment.

The polarizing film as a major component of the polarizing plate is an element allowing only the passage of light on the plane of polarization in a given direction. The typical polarizing film currently known is a polyvinyl alcohol type polarizing film, including an iodine-dyed polyvinyl alcohol type film and a dichroic-dyed one. There are used a polarizing film obtained by uniaxially stretching a film formed from an aqueous polyvinyl alcohol solution and dying it, or one obtained by uniaxially stretching the dyed film, followed by a durability treatment with a boron compound. The polarizing film has a thickness of 5 - 40 $\mu$m, preferably has a thickness of 5 - 30 $\mu$m, and more preferably has a thickness of 5 - 20 $\mu$m. One surface of a cellulose ester film of the present invention is attached onto the surface of the polarizing film to form a polarizing plate. Adhesion is preferably conducted employing an aqueous adhesive composed mainly of completely saponified polyvinyl alcohol.

Since the polarizing film is stretched in one direction (usually in the longitudinal direction), when a polarizing plate is placed at high temperature and high humidity, the polarizing film shrinks in the stretching direction (usually in the longitudinal direction), and expands in the direction orthogonal to the stretching direction (usually in the width direction). The thinner the thickness of a polarizing plate protective film, the larger expansion and shrinkage of a polarizing plate is. Specifically the shrinkage in the longitudinal direction is larger. When forming a thinner polarizing plate protective film, it is desired to inhibit the expansion and shrinkage of the film specifically in the casting direction because the stretching direction of the polarizing film is usually the same as the casting direction (MD direction) of the polarizing plate protective film. The optical film of the present invention exhibits excellent dimensional stability, whereby it is suitably utilized as a polarizing plate protective film.The polarizing plate is composed of a polarizer and protective films to protect both surfaces of the polarizer. Further, a protective film can be attached onto one surface of the polarizing plate and a separable film can be attached onto the other surface. The protective film and the separable film are employed for the purpose of protecting the polarizing plate during inspection of the product when making shipment of polarizing plates. In this case, the protective film is attached onto the surface of the polarizing plate for the purpose of protecting the surface of the polarizing plate, and is provided on the opposite surface side of the surface where the polarizing plate is attached to a liquid crystal plate. Further, the separable film is employed for the purpose of covering an adhesive layer to attach to a liquid crystal cell, and is provided on the surface side where the polarizing plate is attached onto the liquid crystal cell.

«Liquid crystal display device»

The polarizing plate including a polarizing plate protective film (which may also serve as a retardation film) as an optical film of the present invention exhibits higher display quality than that of a conventional polarizing plate, and is specifically suitable for application to a multi-domain type liquid crystal display device, but more preferably suitable for application to a multi-domain liquid crystal display apparatus operated in the birefringence mode.

The polarizing plate of the present invention can be utilized in the MVA (Multi-domain Vertical Alignment), PVA (Patterned Vertical Alignment) mode, CPA (Continuous Pinwheel Alignment) mode, OCB (Optical Compensated Bend) mode or the like, and is not limited to a specific liquid crystal mode or placement of the polarizing plate.

The liquid crystal display device is utilized as an apparatus for color display and moving image display, and exhibits improved display quality, contrast and durability of a polarizing plate in the present invention, whereby a reliably faithful moving image display with being tireless from staring at the liquid crystal display device becomes possible.

In a liquid crystal display device including at least a polarizing plate fitted with a retardation film, one polarizing plate fitted with a polarizing plate protective film as an optical film is placed with respect to a liquid crystal cell, or two polarizing plates are placed on both sides of the liquid crystal cell. In this case, display quality can be improved when the polarizing plate is utilized in such a way that the polarizing plate protective film side faces the liquid crystal cell of the liquid crystal display device. In Fig. 7, films 22a and 22b each face the liquid crystal cell of the liquid crystal display device.

In such the structure, the polarizing plate protective film as an optical film can compensate the liquid crystal cell optically. In cases where a polarizing plate of the present invention is utilized in a liquid crystal display device, at least one of the polarizing plates used in the liquid crystal display device may be a polarizing plate of the present invention. Display quality is improved by utilizing a polarizing plate of the present invention, and a liquid crystal display device exhibiting an excellent viewing angle property can be provided.

In the polarizing plate of the present invention, a polarizing plate protective film made of a cellulose derivative is provided on the surface on the opposite side of a polarizing plate protective film as an optical film of the present invention, and a general-purpose TC film and so forth are usable therein. In order to improve quality of the display device, the polarizing plate protective film located far away from the liquid crystal cell can also be provided with other functional layers.

For example, in order to prevent reflection, glaring, scratches and dust adhesion, and to improve luminance, a film in which a commonly known functional layer for a display can be provided as a component may be utilized or it may be attached on the surface of a polarizing plate layer of the present invention, but the present invention is not limited thereto.

In general, in the case of a retardation film, the small fluctuation of Ro or Rt as the above-described retardation value is desired to be obtained to produce a stable optical property. The fluctuation tends to cause image unevenness especially in the liquid crystal display device with the birefringence mode.

Since a polarizing plate protective film prepared by a melt casting film formation method according to the present invention is made of a cellulose resin as a main component, saponification inherent to a cellulose ester can be utilized to conduct an alkaline treatment. When the resin constituting a polarizer is polyvinyl alcohol, an aqueous solution of completely saponified polyvinyl alcohol can be employed for lamination with a polarizing plate protective film, similarly to the case of a conventional polarizing plate protective film. Thus, the present invention is excellent in view of possible application of a conventional polarizing plate processing method, and specifically excellent because a lengthy roll polarizing plate can be obtained.

The manufacturing advantages obtained by the present invention are specifically noteworthy in a lengthy winding product of at least 100 meters. The longer the winding product such as those of 1500 m, 2500 m and 5000 m, the higher manufacturing effect in preparation of the polarizing plate is produced.

In preparation of a retardation film, for example, the roll length is 10 - 5000 m in consideration of productivity and transportability, and more preferably 50 - 4500 m. As the film width in this case, a width suitable for the polarizer width and the production line can be selected. A film having a width of 0.5 - 4.0 m, but preferably having a width of 0.6 - 3.0 m may be manufactured, and wound in the form of a roll to conduct a process for a polarizing plate. Alternatively, after a film having at least double width with respect to the intended width is manufactured, and wound in the form of a roll, a roll having the intended width may be obtained via cutting of the film to apply such the roll to the process for a polarizing plate.

When manufacturing a polarizing plate protective film, a functional layer such as an antistatic layer, a hard coat layer, a lubricating layer, an adhesive layer, an antiglare layer, a barrier layer or the like may be coated before and/or after stretching. In this case, various surface treatments such as a corona discharging treatment, a plasma treatment and a medicinal solution treatment can be conducted, if desired.

In the film forming process, after a clip holding section at both ends of the film having been cut is pulverized or a granulating treatment is carried out, it may be reused as raw material for the same kind of the film or as raw material for a different kind of the film.

The composition containing a cellulose ester with additives having different concentration such as the foregoing plasticizer, UV absorbent, matting agent and so forth can be extruded together to prepare a multilayered cellulose ester film of lamination structure. For example, it is possible to prepare a cellulose ester film having a structure of a skin layer / core layer / skin layer. For example, a large amount of matting agent can be contained in the skin layer, or the matting agent can be contained in the skin layer alone. A larger amount of plasticizer and UV absorbent can be contained in the core layer than in the skin layer, and alternatively, they may be contained in the core layer alone. Further, different types of the plasticizer and UV absorbent can be contained in the core layer as well as in the skin layer. For example, the skin layer can contain a low volatility plasticizer and/or a UV absorbent, and the core layer can also contain a plasticizer exhibiting excellent plasticity or a UV absorbent exhibiting excellent UV absorptivity. The glass transition temperature of the skin layer may be different from that of the core layer. The glass transition temperature of the core layer is preferably lower than that of the scanning layer. In this case, the glass transition temperatures of the skin layer and the core layer are measured, and the average value calculated from these volume fractions can be defined as the above-described glass transition temperature Tg, whereby the same procedure is also employed for handling. Further, viscosity of a melt containing a cellulose ester during melt casting may be different depending on the cases of the skin layer and the core layer. It can be allowed that viscosity of a skin layer > viscosity of a core layer, and it can also be allowed that viscosity of a core layer ≥ viscosity of a skin layer.

The dimensional stability of an optical film of the present invention has a variation value of within ±2.0% at a temperature of 80 °C and a relative humidity of 90%RH when the dimensions of the film having been left standing at a temperature of 23 °C and a relative humidity of 55%RH for 24 hours, preferably has a variation value of less than 1.0%, and more preferably has a variation value of less than 0.5%.

When an optical film of the present invention is applied for a polarizing plate protective film as a retardation film, and the retardation film itself has a variation exceeding the above-described range, the absolute value of the retardation as a polarizing plate and the orientation angle are deviated from the initial setting, whereby improvement in display quality is undesirably reduced or degraded.

## EXAMPLE

Next, embodiments of the present invention will now be described in detail referring to examples, but the present invention is not limited thereto. Incidentally, "parts" described below represents "parts by weight".

First, materials employed in the examples will be described.

(Cellulose ester)

Table 1

| Cellulose ester | Substitution degree of acyl group | | | Mn | Mw/Mn |
|---|---|---|---|---|---|
| | Ac | Pr | Bu | | |
| C-1 | 1.4 | 1.3 | - | 86000 | 2.5 |
| C-2 | 1.3 | 1.2 | - | 66000 | 3.0 |
| C-3 | 1.7 | 1 | - | 73000 | 2.9 |
| C-4 | 2 | 0.7 | - | 91000 | 2.4 |
| C-5 | 0.08 | 2.76 | - | 76000 | 3.2 |
| C-6 | 0.65 | 1.73 | - | 67000 | 3.0 |
| C-7 | 1.05 | 1.73 | - | 60000 | 3.3 |
| C-8 | 2.2 | - | 0.63 | 66000 | 3.0 |

In addition, in Table 1, Ac represents an acetyl group, Pr represents a propionyl group, and Bu represents a butyryl group.

(Plasticizer)

Plasticizer 1: Trimethylol propane tribenzoate
Plasticizer 2: Glycerin tribenzoate

(Additives)

Additive 1: IRGANOX 1010 (produced by Ciba Specialty Chemicals Inc.)
Additive 2: tetrakis(2,4-di-t-butyl-5-methylphenyl)-4,4'-biphenylenediphosphonite
Additive 3: IRGAFOS P-EPQ (produced by Ciba Specialty Chemicals Inc.)
Additive 4: Sumilizer GM (produced by Sumitomo Chemical Co., Ltd.)
Additive 5: Sumilizer GS (produced by Sumitomo Chemical Co., Ltd.)

(UV absorbent)

UVP-1: A polymeric UV absorbent of the following composition having a weight average molecular weight of 10000; 2(2'-hydroxy-5'-t-butyl-phenyl)-5-carboxylic acid-(2-methacryloyloxy) ethylester-2H-benzotriazole : methyl methacrylate : hydroxyethyl methacrylate = 20 : 65 : 15

UVP-2: A polymeric UV absorbent of the following composition having a weight average molecular weight of 10000; 2(2'-hydroxy-5'-t-butyl-phenyl)-5-carboxylic acid-(2-methacryloyloxy) ethylester-2H-benzotriazole : methyl methacrylate : hydroxyethyl methacrylate = 10 : 75 : 15

UVP-3: A polymeric UV absorbent of the following composition having a weight average molecular weight of 3000;

2(2'-hydroxy-5'-t-butyl-phenyl)-5-carboxylic acid-(2-methacryloyloxy) ethylester-2H-benzotriazole : methyl methacrylate : hydroxyethyl methacrylate = 40 : 45 : 15

(Comparative compound)

TINUVIN-900 (produced by Ciba Specialty Chemicals Inc.)
TINUVIN-328 (produced by Ciba Specialty Chemicals Inc.)
LA-31 (produced by ADEKA Corporation)
LUVA-100 (produced by Otsuka Chemical Co., Ltd.) TINUVIN-900 (produced by Ciba Specialty Chemicals Inc.)

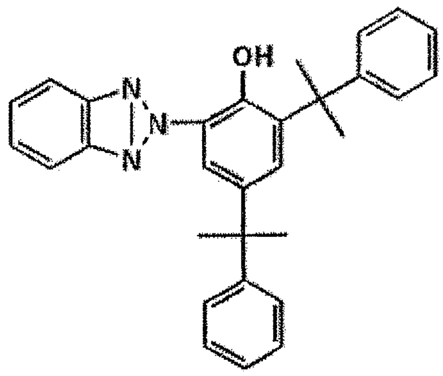

TINUVIN-328 (produced by Ciba Specialty Chemicals Inc.)

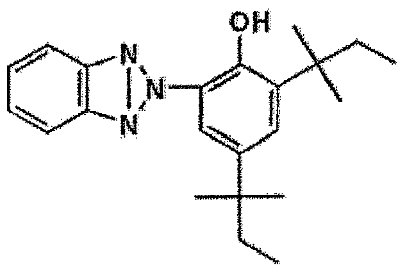

LA-31 (produced by ADEKA Corporation)

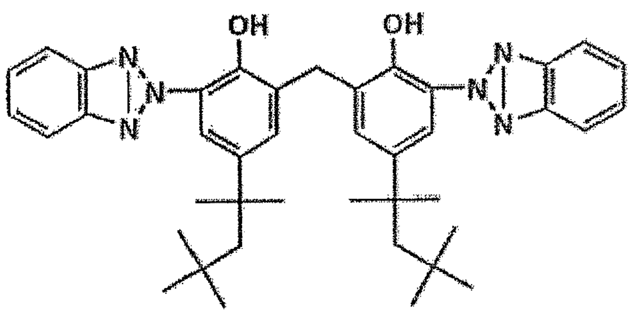

LUVA-100 (produced by Otsuka Chemical Co., Ltd.)

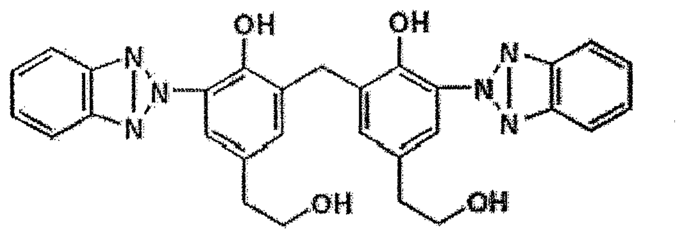

Example 1

[Preparation of optical film (hereinafter, referred to as a cellulose ester film) 1-1]

One hundred parts of the foregoing cellulose ester C-1 were dried under reduced pressure at 70 °C for 3 hours, and cooled to room temperature. The following additives were added into this cellulose ester, and the resulting was melted and mixed at 230 °C to form pellets employing a biaxial extruder. These pellets were melted under nitrogen atmosphere at a melting temperature of 250 °C, and extruded from a T type die. After a film was prepared by a film forming method employing an elastic touch roll shown in the forgoing Fig. 4, a knurling treatment of a width of 10 mm and a height of 5 μm at the film ends was carried out, and the film was wound on a winding core at a winding tension of 220 N/m and a taper of 40% to prepare cellulose ester film 1-1 having a winding length of 3200 m, a film width of 1.8 m and a film thickness of 80 μm.

(Additives)

| | |
|---|---|
| Exemplified compound 1-1 | 2 parts |
| Exemplified compound 103 | 0.3 parts |
| Additive 1: IRGANOX 1010 (produced by Ciba Specialty Chemicals Inc.) | 0.5 parts |
| Additive 2: tetrakis(2,4-di-t-butyl-5-methylphenyl)-4,4'-biphenylenediphosphonite | 0.25 parts |
| Plasticizer 1: Trimethylol propane tribenzoate | 8.0 parts |

[Preparation of cellulose ester films 1-2 - 1-59]

Further, cellulose ester films of the present invention 1-2 - 1-55 and cellulose ester films of comparative examples 1-56 - 1-59 were prepared similarly to preparation of cellulose ester film 1-1, except that cellulose eater, exemplified compound 1-1 (UV absorbent) and exemplified compound 103 {a compound represented by Formula (2)} were replaced by compounds described in Tables 2 and 3.

In addition, when two kinds of UV solvents were used in combination, the total addition amount was set to 2 parts by weight, and a combination ratio was set to 1 : 1.

[Preparation of cellulose ester film 1-60]

The following composition was charged in a sealed container, maintained under applied pressure at 80 °C, and completely dissolved while stirring to obtain a dope composition. The following dope composition was filtrated, cooled to keep a temperature of 33 °C, and evenly cast on a stainless band to vaporize a solvent until peeling becomes possible. At this point, the film was peeled off the stainless band, dried via conveyance with a lot of rolls, and knurling with a height of 5 μm at both end portions was provided for winding to obtain cellulose ester film of the present invention 1-60 having a film thickness 0f 80 μm, a film width of 1.8 m and a film length of 3200 m.

(Dope composition)

| | |
|---|---|
| Cellulose ester C-1 | 100 parts |

(continued)

| | |
|---|---|
| Methylene chloride | 400 parts |
| Ethanol | 75 parts |
| Exemplified compound 1-1 | 2 parts |
| Additive 1: IRGANOX 1010 (produced by Ciba Specialty Chemicals Inc.) | 0.5 parts |
| Additive 2: tetrakis(2,4-di-t-butyl-5-methylphenyl)-4,4'-biphenylenediphosphonite | 0.25 parts |
| Plasticizer 1: Trimethylol propane tribenzoate | 8.0 parts |

[Preparation of cellulose ester films 1-61 - 1-63]

Further, cellulose ester films of the present invention 1-61 - 1-62 and cellulose ester film of comparative example 1-63 were prepared similarly to preparation of cellulose ester film 1-60, except that exemplified compound 1-1 was replaced by compounds described in Table 3.

[Evaluation of cellulose ester film]

The resulting cellulose ester was evaluated by the following method. Evaluated results are shown in Tables 2 and 3.

(Wrinkles when starting winding)

An operation in which a cellulose ester film was wound on a winding core was conducted. In cases where failures were caused via generation of wrinkles at a time of when starting winding, the cellulose ester film was removed from the winding core to wind it up again. The number of failures in this case was counted. This operation was conducted 10 times to obtain an average value, and to rank it into the following levels.

A: Less than one time
B: At least one time and less than 3 times
C: At least 3 times and less than 5 times
D: At least 5 times

(Horseback failure and winding core transfer)

A cellulose ester film sample having been wound up was doubly wrapped with a polyethylene sheet, and was stored at 28 °C and 55%RH for 30 days by a storage method as shown in Figs. 8(a), 8(b) and 8(c). After taking it out, the polyethylene sheet was uncovered. Then, sight of a lighting fluorescent tube is caught on the surface of the cellulose ester film sample via reflection, and distortion or fine change thereof was observed to rank the horseback failure into the following levels.

A: A lighting fluorescent tube is observed with no distortion.
B: A lighting fluorescent tube is observed partially with some distortion.
C: No lighting fluorescent tube is clearly observed because of distortion.

Further, measured was a length of generated winding core transfer, such that the cellulose ester film sample was wound up after storage, and up to how many meters of the film sample from the winding core portion a spot-shaped deformation of at least 50 μm or a belt-shaped deformation in the width direction was clearly observed. Then, the measured were ranked into the following levels.

A: Less than 15 m from a winding core portion
B: At least 15 m and less than 30 m from a winding core portion
C: At least 30 m and less than 50 m from a winding core portion
D: At least 50 m from a winding core portion

[Preparation and evaluation of polarizing plate]

(Preparation of polarizer)

A polyvinyl alcohol film having a thickness of 120 μm was uniaxially stretched (a temperature of 110 °C and a stretching magnification of 5 times). This was immersed in an aqueous solution containing 0.075 g of iodine, 5 g of potassium iodide and 100 g of water for 60 seconds, and subsequently immersed in a 68 °C aqueous solution containing 6 g of potassium iodide, 7.5 g of a boric acid and 100 g of water. The resulting was washed and dried to obtain a polarizer.

(Alkali saponification treatment)

Cellulose ester film samples 1-1 - 1-63 each were doubly wrapped with a polyethylene sheet, and was stored at 28 °C and 55%RH for 30 days by a storage method as shown in Figs. 8(a), 8(b) and 8(c). After removing each of polyethylene sheets, the cellulose ester film having been wound out was subjected to an alkali saponification treatment with the following processes.

| | | |
|---|---|---|
| Saponification process | 2 mol/L NaOH | (at 50 °C for 90 sec.) |
| Washing process | water | (at 30 °C for 45 sec.) |
| Neutralization process | 10% by weight of HCl | (at 30 °C for 45 sec.) |
| Washing process | water | (at 30 °C for 45 sec.) |

After conducting a saponification process, a washing process, a Neutralization process and another washing process were carried out in order, and drying was subsequently conducted at 80 °C.

The above-described resulting cellulose ester films were placed on the both sides of a polarizer, and attached from the both surface sides of the polarizer employing an aqueous completely saponified 5% by weight polyvinyl alcohol solution as an adhesive to prepare a polarizing plate onto which the polarizing plate protective film was attached, provided that the surface of the cellulose ester film subjected to an alkali saponification treatment was on the side of the polarizer.

(Characteristic evaluated as liquid crystal display device)

The polarizing plate of a 32-inch TFT type color liquid crystal display VEGA (produced by Sony Corp.) was peeled, and each of the above-described resulting polarizing plates was trimmed off corresponding to size of the liquid crystal cell. The resulting two polarizing plates as described above to sandwich the liquid crystal cell were attached so as to be perpendicular to each other in such a way that the polarizing axis of the polarizing plate does not change from the original axis to produce the 32-inch TFT type color liquid crystal display. Then, the characteristic as a polarizing plate of the cellulose ester film was evaluated.

(Front contrast)

Measurement was conducted at 23 °C and 55%RH after lighting up a backlight of this liquid crystal display, and being left standing for 30 minutes. Employing EZ-Contrast 160D, produced by ELDIM Co., front luminances of a white display and a black display with a liquid crystal TV were measured, and their ratio was designated as front contrast. The higher the value, the sperior the contrast is. Front contrast = front luminance of white display / front luminance of black display

Evaluated results are shown in Tables 2 and 3.

Table 2

| Cellulose ester film No. | Cellulose ester | UV absorbent | | Compound represented by Formula (2) | Wrinkles when starting winding | Horseback failure | Winding core transfer | Front contrast | Remarks |
|---|---|---|---|---|---|---|---|---|---|
| | | Kind 1 | Kind 2 | | | | | | |
| 1-1 | C-1 | 1-1 | - | 103 | A | A | A | 820 | Inv. |
| 1-2 | C-1 | 1-13 | - | 103 | A | A | A | 815 | Inv. |
| 1-3 | C-1 | 1-3 | - | 103 | B | A | B | 770 | Inv. |
| 1-4 | C-1 | 1-4 | - | 103 | B | A | B | 766 | Inv. |
| 1-5 | C-1 | 1-7 | - | 103 | B | A | B | 765 | Inv. |
| 1-6 | C-1 | 1-8 | - | 103 | B | A | B | 760 | Inv. |
| 1-7 | C-1 | 1-9 | - | 103 | B | A | B | 765 | Inv. |
| 1-8 | C-1 | 1-11 | - | 103 | B | A | B | 760 | Inv. |
| 1-9 | C-1 | 1-14 | - | 103 | B | A | B | 773 | Inv. |
| 1-10 | C-1 | 1-18 | - | 103 | B | A | B | 768 | Inv. |
| 1-11 | C-1 | 1-20 | - | 103 | A | A | B | 770 | Inv. |
| 1-12 | C-1 | 1-1 | - | 122 | A | A | A | 780 | Inv. |
| 1-13 | C-1 | 1-1 | - | 123 | A | A | A | 786 | Inv. |
| 1-14 | C-1 | 1-1 | - | 124 | A | A | A | 775 | Inv. |
| 1-15 | C-1 | 1-1 | - | 125 | A | A | A | 778 | Inv. |
| 1-16 | C-1 | 1-1 | - | 127 | A | A | A | 780 | Inv. |
| 1-17 | C-1 | 1-1 | - | 134 | A | A | A | 785 | Inv. |
| 1-18 | C-1 | 1-1 | - | 135 | A | A | A | 820 | Inv. |
| 1-19 | C-1 | 1-1 | - | 136 | A | A | A | 787 | Inv. |
| 1-20 | C-1 | 1-1 | - | 137 | A | A | A | 775 | Inv. |
| 1-21 | C-1 | 1-1 | - | 138 | A | A | A | 780 | Inv. |
| 1-22 | C-1 | 1-1 | - | 142 | A | A | A | 782 | Inv. |
| 1-23 | C-1 | 1-1 | - | 108 | A | A | A | 820 | Inv. |

(continued)

| Cellulose ester film No. | Cellulose ester | UV absorbent | | Compound represented by Formula (2) | Wrinkles when starting winding | Horseback failure | Winding core transfer | Front contrast | Remarks |
|---|---|---|---|---|---|---|---|---|---|
| | | Kind 1 | Kind 2 | | | | | | |
| 1-24 | C-1 | 1-1 | - | 145 | A | A | A | 815 | Inv. |
| 1-25 | C-2 | 1-1 | - | 103 | A | A | A | 815 | Inv. |
| 1-26 | C-2 | 1-1 | - | 135 | A | A | A | 815 | Inv. |
| 1-27 | C-2 | 1-1 | - | 128 | A | A | A | 774 | Inv. |
| 1-28 | C-2 | 1-1 | - | 129 | A | A | A | 784 | Inv. |
| 1-29 | C-2 | 1-1 | - | 130 | A | A | A | 776 | Inv. |
| 1-30 | C-2 | 1-1 | - | 131 | A | A | A | 773 | Inv. |
| 1-31 | C-2 | 1-1 | - | 132 | A | A | A | 779 | Inv. |
| 1-32 | C-2 | 1-1 | - | 133 | A | A | A | 780 | Inv. |

Inv.: Present invention

Table 3

| Cellulose ester film No. | Cellulose ester | UV absorbent | | Compound represented by Formula (2) | Wrinkles when starting winding | Horseback failure | Winding core transfer | Front contrast | Remarks |
|---|---|---|---|---|---|---|---|---|---|
| | | Kind 1 | Kind 2 | | | | | | |
| 1-33 | C-2 | 1-20 | - | 103 | A | A | B | 760 | Inv. |
| 1-34 | C-2 | 1-1 | - | 107 | A | A | B | 760 | Inv. |
| 1-35 | C-2 | 1-1 | - | 111 | A | A | B | 765 | Inv. |
| 1-36 | C-2 | 1-1 | - | 119 | A | A | B | 765 | Inv. |
| 1-37 | C-3 | 1-1 | - | 103 | A | A | A | 810 | Inv. |
| 1-38 | C-4 | 1-1 | - | 103 | A | A | A | 800 | Inv. |
| 1-39 | C-5 | 1-1 | - | 114 | B | A | B | 760 | Inv. |
| 1-40 | C-6 | 1-1 | - | 106 | B | A | B | 765 | Inv. |
| 1-41 | C-7 | 1-1 | - | 110 | B | A | B | 765 | Inv. |
| 1-42 | C-8 | 1-1 | - | 103 | B | A | B | 768 | Inv. |
| 1-43 | C-1 | 1-1 | UVP-1 | 103 | A | A | A | 805 | Inv. |
| 1-44 | C-1 | 1-1 | UVP-2 | 103 | A | A | A | 805 | Inv. |
| 1-45 | C-1 | 1-1 | UVP-2 | 135 | A | A | A | 805 | Inv. |
| 1-46 | C-1 | 1-1 | UVP-3 | 103 | A | A | A | 800 | Inv. |
| 1-47 | C-1 | 1-19 | UVP-1 | 103 | B | A | A | 780 | Inv. |
| 1-48 | C-1 | 1-20 | UVP-2 | 103 | B | A | A | 785 | Inv. |
| 1-49 | C-1 | 1-21 | UVP-3 | 103 | B | A | A | 785 | Inv. |
| 1-50 | C-4 | 1-1 | UVP-1 | 103 | B | A | A | 780 | Inv. |
| 1-51 | C-4 | 1-1 | UVP-3 | 103 | B | A | A | 778 | Inv. |
| 1-52 | C-1 | 1-1 | - | *1 | B | A | B | 730 | Inv. |
| 1-53 | C-1 | 1-3 | - | *1 | B | A | B | 710 | Inv. |
| 1-54 | C-1 | 1-4 | - | *1 | B | A | B | 710 | Inv. |
| 1-55 | C-1 | 1-9 | - | *1 | B | A | B | 710 | Inv. |

(continued)

| Cellulose ester film No. | Cellulose ester | UV absorbent | | Compound represented by Formula (2) | Wrinkles when starting winding | Horseback failure | Winding core transfer | Front contrast | Remarks |
|---|---|---|---|---|---|---|---|---|---|
| | | Kind 1 | Kind 2 | | | | | | |
| 1-56 | C-1 | TINUVIN-900 | - | 103 | D | C | D | 560 | Comp. |
| 1-57 | C-1 | TINUVIN-328 | - | 103 | D | C | D | 550 | Comp. |
| 1-58 | C-1 | LA-31 | - | 103 | D | C | D | 590 | Comp. |
| 1-59 | C-1 | RUVA-100 | - | 103 | D | C | D | 595 | Comp. |
| 1-60 | C-1 | 1-1 | - | *1 | B | A | B | 700 | Inv. |
| 1-61 | C-1 | 1-3 | - | *1 | B | A | B | 690 | Inv. |
| 1-62 | C-1 | 1-4 | - | *1 | B | A | B | 690 | Inv. |
| 1-63 | C-1 | TINUVIN-900 | - | *1 | D | C | D | 500 | Comp. |

*1: Not provided, Inv.: Present invention, Comp.: Comparative example

As is clear from Tables 2 and 3, the cellulose ester film of the present invention containing a UV absorbent of the present invention exhibits excellent properties such as wrinkles when starting winding, horseback failure and winding core transfer in comparison to comparative examples. Further, when a polarizing plate prepared by using a cellulose ester film of the present invention is utilized for a liquid crystal display device, it is clear that front contrast is excellent, whereby the polarizing plate for an image display device such as a liquid crystal display or the like has been confirmed to be excellent.

Example 2

Cellulose ester films 2-1 - 2-6 were prepared similarly to preparation of cellulose ester film 1-1, except that as to additives having been used for preparation of cellulose ester film 1-1 in Example 1, a compound represented by Formula (2), additive 2 and plasticizer 1 were replaced by compounds described in Table 4.
Further, wrinkles when starting winding, horseback failure and winding core transfer were evaluated by the same method as in Example 1, and after preparing a polarizing plate, front contrast was evaluated as the characteristic evaluation of a liquid crystal display device.
Evaluated results are shown in Table 4.

Table 4

| Cellulose ester film No. | Cellulose ester | UV absorbent kind | Compound represented by Formula (2) | Additives | Plasticizer | Wrinkles when starting winding | Horse- back failure | Winding core transfer | Front contrast | Remarks |
|---|---|---|---|---|---|---|---|---|---|---|
| 2-1 | C-1 | 1-1 | 103 | Additive 2 | Plasticizer 2 | A | A | A | 815 | Inv. |
| 2-2 | C-1 | 1-1 | 103 | Additive 3 | Plasticizer 2 | A | A | A | 805 | Inv. |
| 2-3 | C-1 | 1-1 | 103 | Additive 3 | Plasticizer 1 | A | A | A | 805 | Inv. |
| 2-4 | C-1 | 1-1 | 135 | Additive 3 | Plasticizer | A | A | A | 810 | Inv. |
| 2-5 | C-1 | 1-1 | 135 | Additive 3 | Plasticizer 2 | A | A | A | 805 | Inv. |
| 2-6 | C-1 | 1-1 | 135 | Additive 2 | Plasticizer 2 | A | A | A | 808 | Inv. |

Inv.: Present invention

As is clear from Table 4, cellulose ester films of the present invention 2-1 - 2-6 each containing a UV absorbent of the present invention exhibit excellent properties such as wrinkles when starting winding, horseback failure and winding core transfer. Further, when a polarizing plate prepared by using a cellulose ester film of the present invention is utilized for a liquid crystal display device, it is clear that front contrast is excellent, whereby the polarizing plate for an image display device such as a liquid crystal display or the like has been confirmed to be excellent.

Example 3

Cellulose ester films 3-1 and 3-2 were prepared similarly to preparation of cellulose ester film 1-1, except that as to additives having been used for preparation of cellulose ester film 1-1 in Example 1, exemplified compound 103 was replaced by additive 4: Sumilizer GM (produced by Sumitomo Chemical Co., Ltd.) or additive 5: Sumilizer GS (produced by Sumitomo Chemical Co., Ltd.) having an equimolar amount to exemplified compound 103.
Further, wrinkles when starting winding, horseback failure and winding core transfer were evaluated by the same method as in Example 1, and after preparing a polarizing plate, front contrast was evaluated as the characteristic evaluation of a liquid crystal display device.
Cellulose ester films of the present invention 3-1 and 3-2 each containing a UV absorbent of the present invention exhibit excellent properties such as wrinkles when starting winding, horseback failure and winding core transfer. Further, when a polarizing plate prepared by using a cellulose ester film of the present invention is utilized for a liquid crystal display device, it is clear that front contrast is excellent, whereby the polarizing plate for an image display device such as a liquid crystal display or the like has been confirmed to be excellent.

**Claims**

1. An optical film comprising a cellulose ester and a UV absorbent represented by the following Formula (1):

Formula (1)

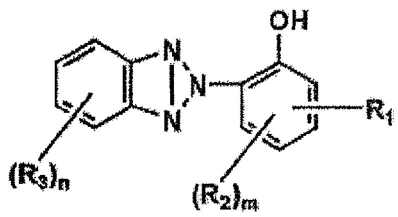

, wherein $R_1$ represents

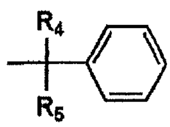

; $R_2$ represents a methyl group, a t-butyl group, a t-amyl group or a t-octyl group; $R_3$ represents a substituent; each of $R_4$ and $R_5$ represents a hydrogen atom or a substituent; m is an integer of 0 - 3; and n is an integer of 0 - 4.

2. The optical film of Claim 1 comprising a compound represented by the following Formula (2):

Formula (2)

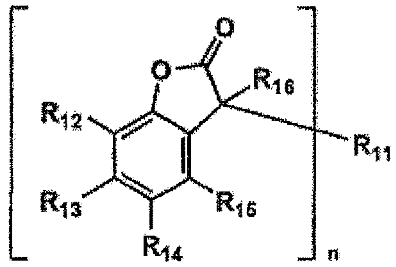

, wherein each of $R_{12}$ - $R_{15}$ independently represents a hydrogen atom or a substituent; $R_{16}$ represents a hydrogen atom or a substituent; and n is 1 or 2, provided that $R_{11}$ represents a substituent when n is 1, and $R_{11}$ represents a divalent linkage group when n is 2.

**3.** The optical film of Claim 1 or 2,
wherein the cellulose ester simultaneously satisfies the following Inequalities (I), (II) and (III):

Inequality (I) $2.4 \leq X + Y \leq 3.0$
Inequality (II) $0 \leq X \leq 2.4$
Inequality (III) $0.5 \leq Y \leq 2.9$
wherein X represents a substitution degree of an acetyl group, and Y represents a substitution degree of a propionyl group or a butyryl group.

**4.** A method of manufacturing an optical film, comprising the step of:

preparing the optical film of any one of Claims 1 - 3 by a melt casting method.

**5.** A polarizing plate,
wherein the optical film of any one of Claims 1 - 3, or the optical film obtained via the method of Claim 4 is provided on at least one surface of a polarizer.

**6.** A liquid crystal display device,
wherein the polarizing plate of Claim 5 is provided on at least one surface of a liquid crystal cell.

FIG. 1

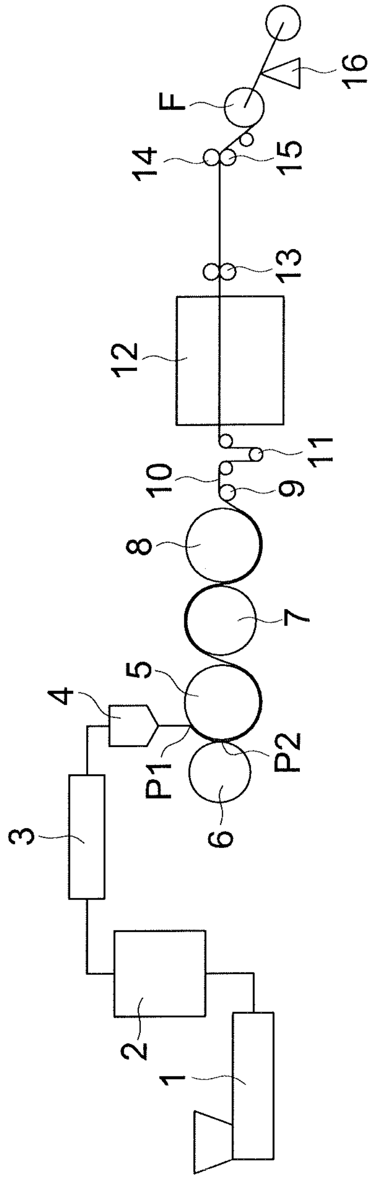


FIG. 2

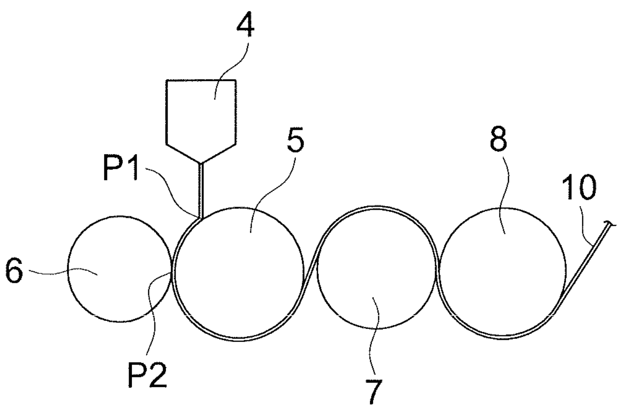

FIG. 3 (a)

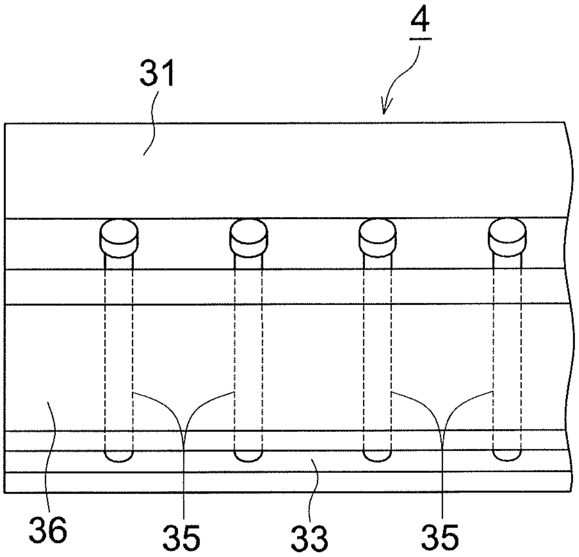


FIG. 3 (b)

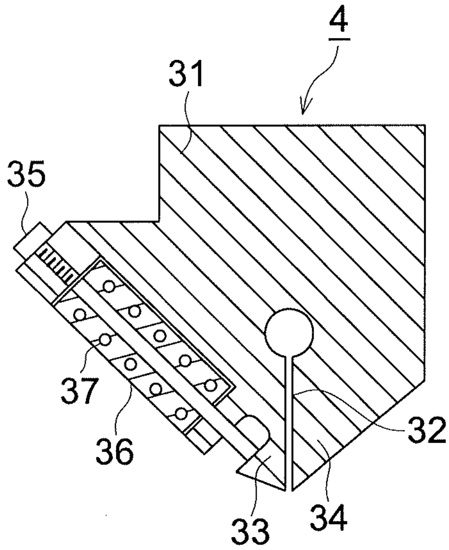


FIG. 4

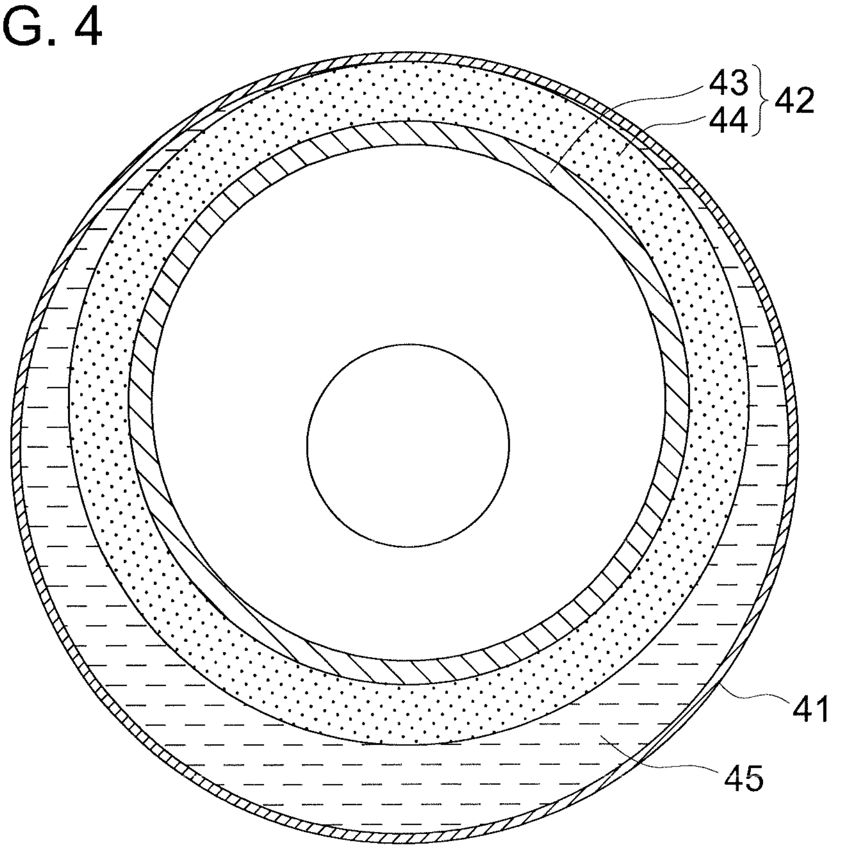

FIG. 5

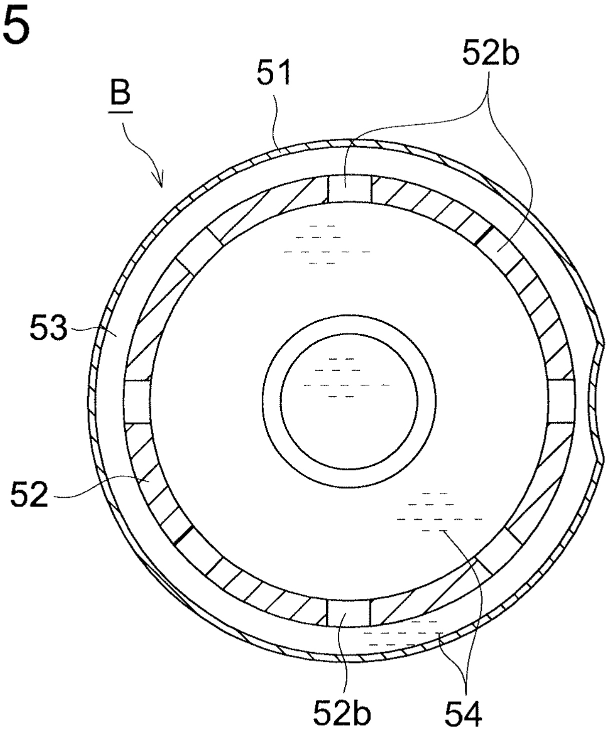
B
51
52b
53
52
52b
54

FIG. 6

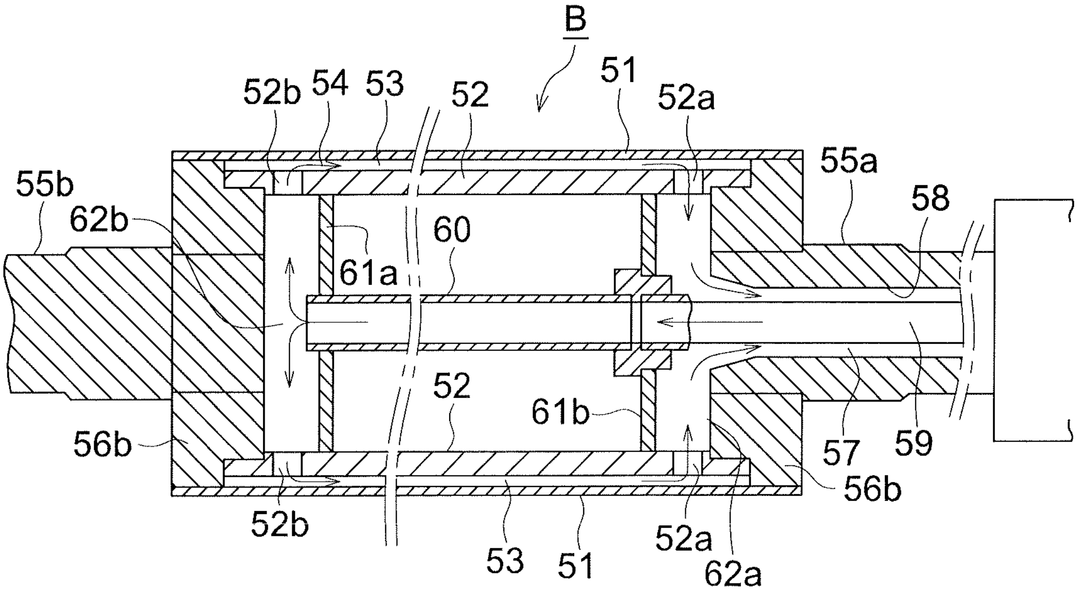
B
52b
54
53
52
51
52a
55a
55b
62b
58
60
61a
52
61b
56b
57
59
56b
52b
53
51
52a
62a

FIG. 7

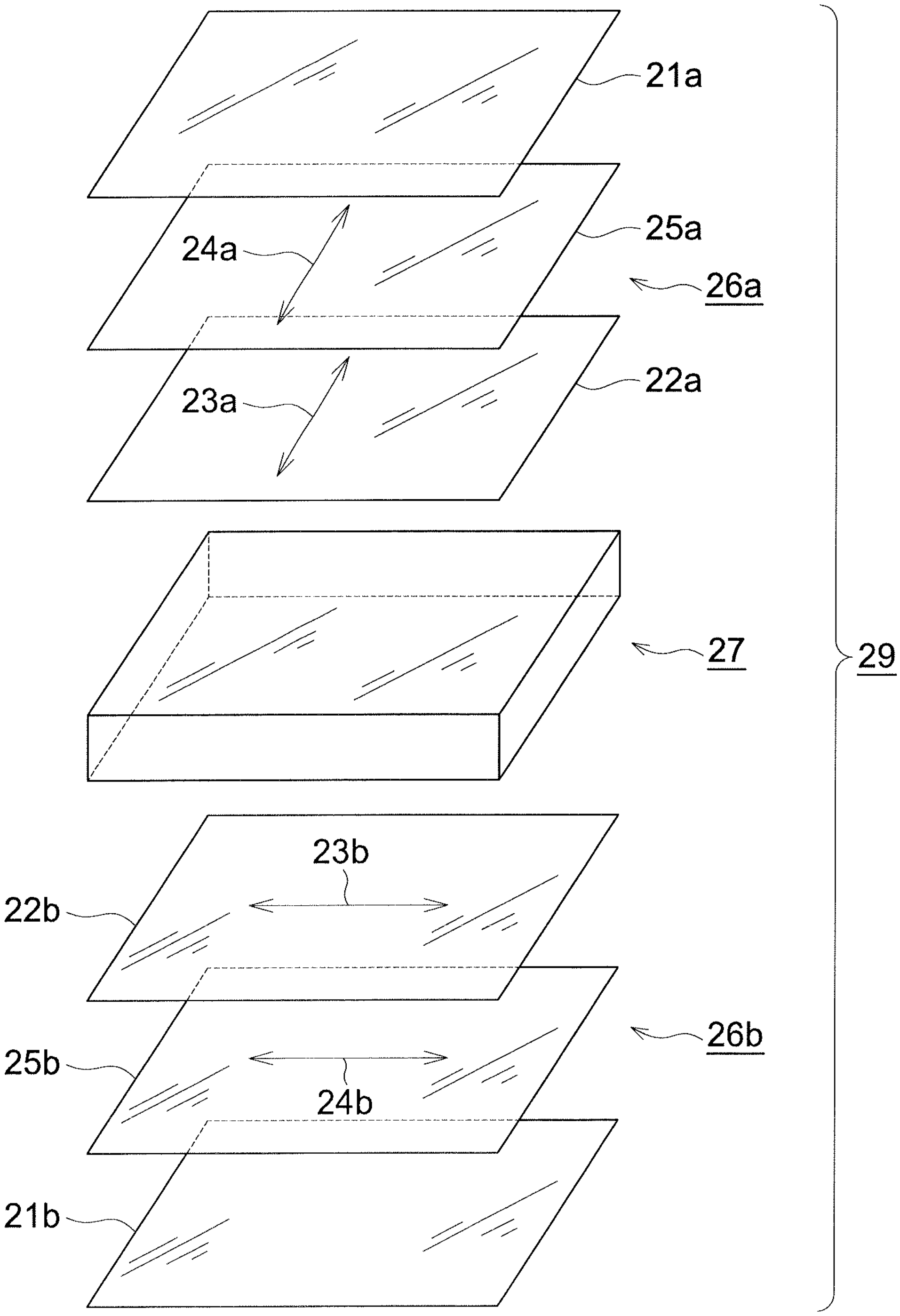

FIG. 8 (a)

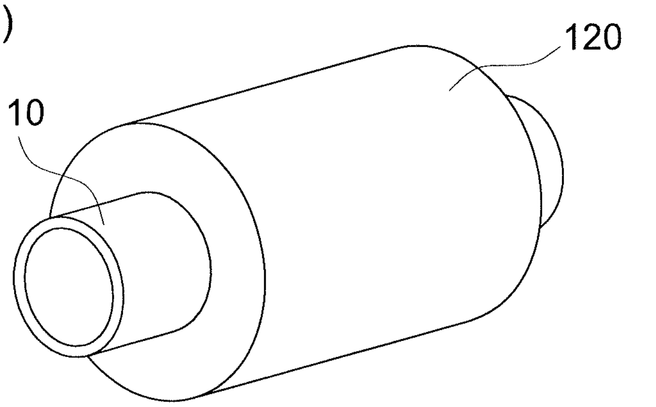


FIG. 8 (b)

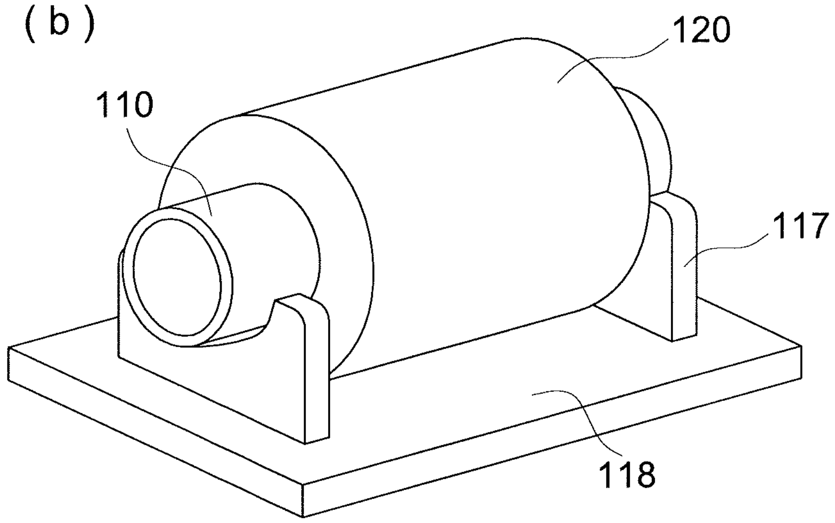


FIG. 8 (c)

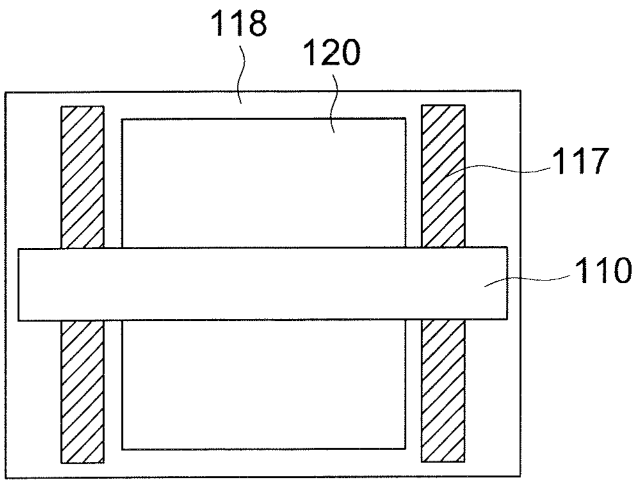

**INTERNATIONAL SEARCH REPORT**

International application No.
PCT/JP2007/063459

A. CLASSIFICATION OF SUBJECT MATTER
*G02B5/30*(2006.01)i, *C08K5/1535*(2006.01)i, *C08K5/3475*(2006.01)i, *C08L1/08* (2006.01)i, *G02F1/1335*(2006.01)i

According to International Patent Classification (IPC) or to both national classification and IPC

B. FIELDS SEARCHED

Minimum documentation searched (classification system followed by classification symbols)
G02B5/30, C08K5/1535, C08K5/3475, C08L1/08, G02F1/1335

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
|---|---|---|
| A | JP 7-11056 A (Fuji Photo Film Co., Ltd.), 13 January, 1995 (13.01.95), Full text (Family: none) | 1-6 |
| A | JP 2003-113317 A (Konica Corp.), 18 April, 2003 (18.04.03), Full text (Family: none) | 1-6 |
| A | JP 2002-40232 A (Konica Corp.), 06 February, 2002 (06.02.02), Full text (Family: none) | 1-6 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 03 September, 2007 (03.09.07) | 11 September, 2007 (11.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/063459

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-31715 A (Konica Corp.), 31 January, 2002 (31.01.02), Full text & US 2002/0102368 A1 | 1-6 |
| A | JP 2001-122980 A (Konica Corp.), 08 May, 2001 (08.05.01), Full text (Family: none) | 1-6 |
| A | JP 2005-225990 A (Ipposha Oil Industries Co., Ltd.), 25 August, 2005 (25.08.05), Full text (Family: none) | 1-6 |
| A | JP 2001-187825 A (Konica Corp.), 10 July, 2001 (10.07.01), Full text (Family: none) | 1-6 |
| A | JP 2005-343907 A (Ricoh Co., Ltd.), 15 December, 2005 (15.12.05), Full text & US 2004/0265573 A1 & EP 1479743 A | 1 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 60038411 A
- JP 62181360 A
- JP 3281685 A
- JP 7090184 A
- JP 6148430 A
- JP 7011056 A
- JP 9090101 A
- JP 6501040 W
- JP 2000352620 A
- JP 2002003083 A
- JP 2005178194 A
- JP 2005301225 A
- JP 2006113175 A
- JP 58185677 A
- JP 59149350 A
- JP 2003113317 A
- JP 10045804 A
- JP 6501040 A
- JP 2003012823 A
- JP 63179953 A
- JP 1168643 A
- US 4137201 A
- JP 5194788 A
- EP 911656 A2
- JP 2006002025 A
- JP 2006002026 A
- JP 2003098348 A
- JP 6094915 A
- JP 6118232 A